# EUROPEAN PATENT SPECIFICATION

(11) **EP 1 455 504 B1**
(45) Date of publication and mention of the grant of the patent: **12.11.2014**
(21) Application number: 04251309.3
(22) Date of filing: 05.03.2004
(51) Int. Cl.: H04L 29/06

(54) **Apparatus and method for processing audio signal and computer readable recording medium storing computer program for the method**
Vorrichtung und Verfahren zur Bearbeitung von Audiosignalen und computerlesbares Aufzeichnungsmedium zur Speicherung des Computerprogramms für das Verfahren
Appareil et méthode pour traiter un signal audio et support d'enregistrement lisible par ordinateur d'un programme informatique utilisant la méthode

(30) Priority: 07.03.2003 US 452534 P; 16.07.2003 US 487264 P; 27.02.2004 KR 2004013679
(43) Date of publication of application: 08.09.2004
(73) Proprietor: Samsung Electronics Co., Ltd., Suwon-si, Gyeonggi-do, 443-742 (KR)
(72) Inventor: Oh, Eun-mi, Seoul (KR); Kim, Sang-wook, Seocho-gu, Seoul (KR); Lee, Sang-jo, Suwon-si, Gyeonggi-do (KR); Kim, Mi-young, Daegu-si (KR)
(74) Representative: Greene, Simon Kenneth

(56) References cited:
- EP-A- 1 248 431
- GB-A- 2 367 219
- US-A- 5 892 754
- US-A1- 2002 143 972
- GUBBI R: "Multimedia streams and quality of service in the next generation wireless home networks" MOBILE MULTIMEDIA COMMUNICATIONS, 1999. (MOMUC '99). 1999 IEEE INTERNATIONAL WORKSHOP ON SAN DIEGO, CA, USA 15-17 NOV. 1999, PISCATAWAY, NJ, USA,IEEE, US, 15 November 1999 (1999-11-15), pages 232-235, XP010370706 ISBN: 0-7803-5904-6

## Description

The present invention relates to an audio signal processing apparatus or software and a service system for supplying an audio signal by wire or wirelessly, and more particularly, to an apparatus and method for processing an audio signal to be streamed and a computer readable recording medium storing a computer program for the method.

Real-time multimedia streaming is required in wired or wireless portable devices, Internet-based Music On Demand (MOD) or Audio On Demand (AOD) services. In such an environment where streaming is required, when an amount of data of an audio signal to be transmitted from a server (not shown) to a terminal (not shown) is greater than the allowable bandwidth of a network (not shown) connected to the terminal, problems such as a packet delay or loss arise with a conventional audio signal processing method due to the buffering of a router and congestion.

In the conventional audio signal processing method, audio signals were processed in an environment where streaming is required not considering the conditions of the terminal, such as the capability or the type of the terminal. For example, regardless of whether the terminal is a personal computer (PC) or a personal digital assistant (PDA), audio signals were streamed at the same bitrate.

In other words, in the above-described conventional audio signal processing method, audio signals are streamed at the same bitrate regardless of both the bitrates of the audio signals and the types of terminals. As a result, the problems of a packet delay and loss or a delay in the processing speed of the terminal arise, lowering the sound quality of audio signals reproduced by the terminal.

Therefore, a method of providing an adaptive quality of a service is required for service quality enhancement.

US 2002/0143972 describes a system for delivering multimedia content to a terminal. The multimedia data is adapted based on a number of factors, including user preference and network and terminal information.

EP 1248431 describes a negotiation technique for achieving a desired quality of service for network communication.

The present invention provides an audio signal processing apparatus that can stream an audio signal by processing it to be suitable for the physical environments of a terminal reproducing the audio signal and/or a network connected to the terminal.

The present invention provides an audio signal processing method in which an audio signal can be streamed by a process suitable for the physical environments of a terminal reproducing the audio signal and/or a network connected to the terminal.

The present invention provides a computer readable recording medium storing a computer program for controlling an audio signal processing apparatus that can stream an audio signal by processing it to be suitable for the physical environments of a terminal reproducing the audio signal and/or a network connected to the terminal.

According to an aspect of the present invention, there is provided an apparatus for processing an audio signal to be reproduced in a terminal connected to a network according to claim 1.

According to another aspect of the present invention, there is provided a method of processing an audio signal to be reproduced in a terminal connected to a network according to claim 33.

The above and other features and advantages of the present invention will become more apparent by describing in detail exemplary embodiments thereof with reference to the attached drawings in which:
FIG. 1 is a block diagram of an audio signal processing apparatus according to the present invention;
FIG. 2 is an exemplary graph illustrating available bandwidths of a network;
FIG. 3 is a block diagram of a main processing unit shown in FIG. 1 according to an embodiment of the present invention;
FIG. 4 is a block diagram of a signal processing unit shown in FIG. 1 according to an embodiment of the present invention;
FIG. 5 is a block diagram of a process determining unit shown in FIG. 4 according to an embodiment of the present invention;
FIG. 6 is a block diagram of a process determining unit shown in FIG. 4 according to another embodiment of the present invention;
FIG. 7 is a flowchart of an audio signal processing method according to the present invention;
FIG. 8 is a flowchart illustrating an embodiment of operation 502 shown in FIG. 7 according to the present invention;
FIG. 9 is a flowchart illustrating another embodiment of operation 502 shown in FIG. 7 according to the present invention;
FIG. 10 is a flowchart illustrating another embodiment of operation 502 shown in FIG. 7 according to the present invention;
FIG. 11 is a flowchart illustrating an embodiment of operation 804 shown in FIG. 10 according to the present invention;
FIG. 12 illustrates an embodiment of a syntax used in the audio signal processing method according to the present invention;
FIG. 13 illustrates an embodiment of semantics used in the audio signal processing method according to the present invention;
FIG. 14 illustrates another embodiment of a syntax used in the audio signal processing method according to the present invention;
FIG. 15 illustrates another embodiment of semantics used in the audio signal processing method according to the present invention;
FIG. 16 illustrates an embodiment of a syntax used when performing a number-of-channels adjusting process according to the present invention;
FIG. 17 illustrates another embodiment of semantics used when performing the number-of-channels adjusting process according to the present invention;
FIG. 18 illustrates an embodiment of a syntax is used when performing a band reducing process according to the present invention;
FIG. 19 illustrates an embodiment of semantics used when performing the band reducing process according to the present invention;
FIG. 20 illustrates an embodiment of a syntax used when performing a data selecting process according to the present invention;
FIG. 21 illustrates an embodiment of semantics used when performing the data selecting process according to the present invention;
FIG. 22 illustrates an embodiment of the number-of-channels adjusting process according to the present invention;
FIG. 23 illustrates an organization of MPEG-21 DIA tools;
FIG. 24 illustrates exemplary contents of the data selecting process;
FIG. 25 illustrates exemplary contents of the number-of-channels adjusting process;
FIG. 26 illustrates exemplary contents of the band reducing process;
FIG. 27 illustrates an appearance of a general streaming system;
FIG. 28 is a graphical illustration of a table including sound quality information expressed using an objective difference grade (ODG) according to an embodiment of the present invention;
FIG. 29 is a graphical illustration of a table including sound quality information expressed using a distortion index (DI) according to another embodiment of the present invention;
FIG. 30 is a graphical illustration of a table including sound quality information of news, which is expressed using the ODG according to another embodiment of the present invention;
FIG. 31 is a graphical illustration of a table including sound quality information of a piece of popular music, which is expressed using the ODG according to another embodiment of the present invention;
FIG. 32 illustrates an embodiment of a table according to the present invention, which is expressed in XML;
FIG. 33 is a graphical illustration of a table according to another embodiment of the present invention;
FIG. 34 illustrates an embodiment of a general bitstream description (gBSD) on a bit sliced arithmetic coding (BSAC) stream; and
FIG. 35 illustrates another embodiment of a gBSD on a BSAC stream.

The structure and operation of an audio signal processing apparatus according to the present invention will be described in the following embodiments with reference to the appended drawings.

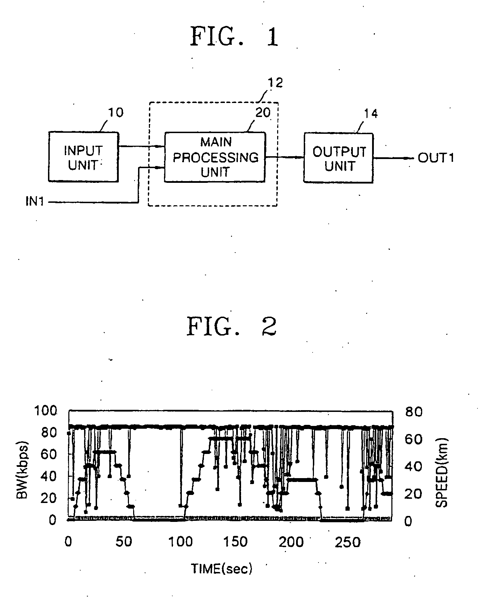

FIG. 1 is a block diagram of an audio signal processing apparatus according to the present invention, which includes an input unit 10, a signal processing unit 12, and an output unit 14.

The audio signal processing apparatus shown in FIG. 1 processes an audio signal to be reproduced in a terminal connected to a network (not shown). The status of the network connected to the terminal is not constant and varies at any time. The status of the terminal also varies at any time, like the network.

According to an embodiment of the present invention, the audio signal processing apparatus shown in FIG. 1 may be included in a server side (not shown), which streams the audio signal toward the terminal. Here, the server side may include a server (not shown).

In another embodiment of the present invention, the audio signal processing apparatus shown in FIG. 1 may be included in the terminal.

In another embodiment of the present invention, the audio signal processing apparatus shown in FIG. 1 may be included in each of the server side and the terminal.

The input unit 10 shown in FIG. 1 receives the audio signal and outputs it to the signal processing unit 12.

The signal processing unit 12 receives the audio signal output from the input unit 10 and receives at least one of network information and terminal information through an input port IN1. The signal processing unit 12 processes the audio signal using signal information and at least one of the received network information and terminal information, and outputs the processed result. Here, the network information and the terminal information may be provided from the terminal. The signal processing unit 12 may receive the signal information from the input unit 10 or may generate the signal information from the audio signal received from the input unit 10.

According to the present invention, the above-described network information, which refers to information regarding the network, may include information on the status of the network. For example, the network information may include at least one of an available bandwidth of the network, the static capabilities of the network, and the time-varying conditions of the network. The available bandwidth of the network may continually vary depending on the number of users connected to the network through paths.

With the assumption that CDMA2000 1x is used as the network, an average available bandwidth with respect to varying speed of a vehicle can be measured using a network monitoring program.

FIG. 2 is an exemplary graph illustrating available bandwidths of a network, in which the X-axis denotes time in seconds, and the Y-axis denotes available bandwidth (BW) of the network in kbps (kilo bit per second), expressed by ■, and the speed of a vehicle in km per hour, expressed by ◆.

The above-described average available bandwidth (BW) may vary as illustrated in FIG. 2.

The above-described static capabilities of a network may refer to the maximum bandwidth of the network expressed in bits/sec. The time-varying conditions of the network may refer to a one-way packet delay difference between successive packets, a packet loss rate of a particular channel, etc. For example, the packet loss rate may range from "0" to "1". When a packet loss rate is 0, it means that there is no packet loss. When a packet loss rate is 1, it means that all packets are lost.

Meanwhile, the terminal information, which refers to information on the terminal, may include at least one of the capabilities of the terminal, the type of the terminal, and the status of the terminal. For example, the terminal information may include at least one of the allowable bitrate, a computation time, power, storage characteristics, and a type of the terminal. The allowable bitrate of the terminal, in kbps, refers the amount of data that can be received by the terminal. The computation time of the terminal may refer to the processing capability of, for example, a central processing unit (CPU) installed in the terminal. Information regarding the power of the terminal may include average power consumption of the terminal in Amperes per hour. The storage characteristics of the terminal may include the storage capacity of the terminal, measured in Mbytes. The type of the terminal may include information regarding whether, for example, the type of the terminal is a personal computer (PC) or a personal digital assistant (PDA).

A conventional method of measuring the above-described terminal information and network information is disclosed in U.S. Patent Publication No. 2003/0083870, entitled "System and Method of Network Adaptive Real-time Multimedia Streaming".

Meanwhile, the above-described signal information, which refers to information on an audio signal, may include information on the bitrate or the type of the audio signal. A high bitrate of an audio signal means that there is a large amount of data to be streamed. The type of an audio signal refers to an attribute of the audio signal, i.e., whether the audio signal is news or a piece of popular music or classical music, whether the audio signal is a mono signal, a stereo signal, or a multi-channel signal, etc.

The output unit 14 streams the audio signal processed by the signal processing unit 12 through an output port OUT1. The output unit 14 may store and reproduce the audio signal processed by the signal processing unit 12.

The above-described audio signal processing apparatus according to the present invention may be implemented, in various forms, for example, only with the input unit 10 and the signal processing unit 12. For example, when the audio signal processing apparatus is included in the terminal, the audio signal processing apparatus of FIG. 1 may be implemented only with the input unit 10 and the signal processing unit 12.

In an embodiment of the present invention, the signal processing unit 12 shown in FIG. 1 may be implemented with a main processing unit 20. The main processing unit 10 processes the audio signal using at least one of a number-of-channels adjusting process, a data selecting process, and a band reducing process according to at least one of the network information and terminal information input through the input port IN1 and outputs the processed result to the output unit 14.

According to the present invention, the data selecting process refers to a process by which the main processing unit 20 selects a part of data included in the audio signal received from the input unit 10. For example, when a bitrate of the audio signal received from the input unit 10 is greater than an allowable bitrate or an available bandwidth, the main processing unit 20 truncates enhancement data of the audio signal. The enhancement data of the audio signal is truncated because the enhancement data contain more significant data than non-enhancement data. The main processing unit 20 may truncate the enhancement data of the audio signal received from the input unit 10 according to the bitrate of the audio signal. According to the present invention, when performing the data selecting process, the enhancement data may be truncated in units of bits or in units of layers. According to the present invention, a maximum amount of enhancement data that can be truncated from the input audio signal may be predetermined. The audio signal output from the input unit 10 may include information on the maximum amount of the enhancement data that can be truncated.

According to the present invention, the above-described band reducing process refers to a process by which the main processing unit 20 discards a high frequency component of the audio signal received from the input unit 10. For example, when a bitrate of the audio signal received from the input unit 10 is greater than an allowable bitrate or an available bandwidth, the high frequency component of the audio signal is discarded by the main processing unit 20. The high frequency component of the audio signal is discarded because the human hearing system is less sensitive to high-frequency component variations. The main processing unit 20 may discard the high frequency component of the audio signal received from the input unit 10 according to the bitrate of the audio signal. According to the present invention, a maximum amount of the high frequency component of the audio signal that can be discarded may be predetermined. The audio signal output from the input unit 10 may include information on the maximum amount of the high frequency component that can be discarded.

According to the present invention, the number-of-channels adjusting process refers to a process by which the main processing unit 20 adjusts the number of channels of the audio signal received from the input unit 10. Here, the audio signal may be transmitted from the input unit 10 to the signal processing unit 12 in a stereophonic mode, a monophonic mode, or a multi-channel mode such as 5.1 surround mode. For example, when a bitrate of the audio signal received from the input unit 10 is greater than an allowable bitrate or an available bandwidth, the main processing unit 20 drops one or more channels of the audio signals. Meanwhile, when a bitrate of the audio signal received from the input unit 10 is smaller than an allowable bitrate or an available bitrate, the main processing unit 20 adds one or more channels of the audio signal. As such, the main processing unit 20 may drop or add the number of channels of the audio signal received from the input unit 10 depending on the bitrate of the input audio signal. Here, according to the present invention, at least one of a maximum number of channels that can be dropped or added, channel numbers, and/or a channel configuration may be predetermined. The audio signal output from the input unit 10 may include such information, i.e., on the maximum number of channels that can be dropped or added and/or channel numbers, and a channel configuration. The channel configuration indicates whether the channel to be dropped or added is a right channel, a left channel, or a surround channel.

A larger amount of data can be truncated using the number-of-channel adjusting process than by the data selecting process or the band reducing process. Therefore, the main processing unit 20 may perform the number-of-channel adjusting process when a bitrate of the audio ratio is very large and may perform the data selecting process and/or the band reducing process when a bitrate of the audio signal is not large.

For example, when a bitrate of the audio signal received from the input unit 10 is equal to an allowable bitrate or an available bitrate, the main processing unit 20 may output the audio signal to the output unit 14 without performing any process on the audio signal, such as a data selecting process, a band reducing process, and a number-of-channels adjusting process. The output unit 14 streams the entire audio signal received through the main processing unit 20 of the signal processing unit 12 from the input unit 10 through the output port OUT1. When the audio signal processing apparatus of FIG. 1 is installed in the server side, the output unit 14 streams the audio signal toward the terminal.

The audio signal input to the signal processing unit 12 from the input unit 10 shown in FIG. 1 may be a compressed audio signal or a non-compressed audio signal. A compressed audio signal may undergo transformation in units of frames prior to be compressed. For example, the compressed audio signal may be a bitstream providing the functionality of scalability, such as an MPEG-4 BSAC (Bit Sliced Arithmetic Coding) bitstream with fine grain scalability (FGS), or an MPEG-4 AAC (Advanced Audio Coding) scalable bitstream. BSAC is described in detail in ISO/IEC 14495-3:2001. For example, the non-compressed audio signal may include PCM (Pulse Coding Modulation) data or wave data.

The signal processing unit 12 shown in FIG. 1 performs a data selecting process only when the input audio signal is a compressed bitstream. However, the signal processing unit 12 may perform a number-of-channels adjusting process or a band reducing process on both a compressed audio signal and a non-compressed audio signal.

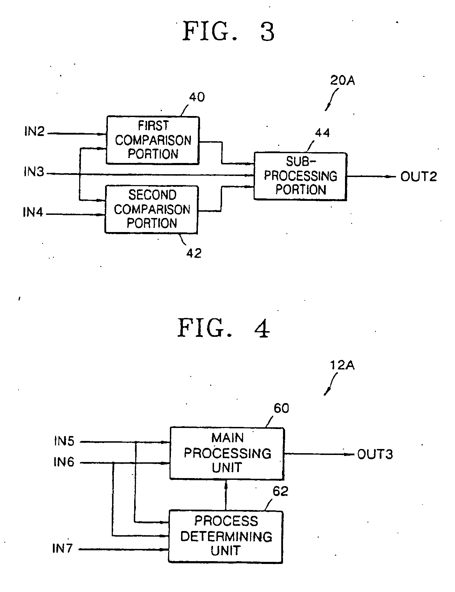

FIG. 3 is a block diagram of an embodiment 20A of the main processing unit 20 shown in FIG. 1 according to the present invention, which include a first comparison portion 40, a second comparison portion 42, and a sub-processing portion 44.

The first comparison portion 40 shown in FIG. 3 receives the network information through an input port IN2 and the signal information through an input port IN3, compares the received network information and signal information, and outputs the result of the comparison to the sub-processing portion 44.

The second comparison portion 42 receives the signal information through an input port IN3 and terminal information through an input port IN4, compares the received signal information and terminal information, and outputs the results of the comparison to the sub-processing portion 44.

The sub-processing portion 44 processes the audio signal received through the input port IN3 from the input unit 10 in response to the results of the comparisons performed in the first and second comparison portions 40 and 42, and outputs the processed result to the output unit 14 through an output port OUT2. For example, the sub-processing portion 44 performs at least one of the number-of-channels adjusting process, the data selecting process, and the band reducing process on the audio signal in response to the results of the comparisons performed in the first and second comparison portions 40 and 42.

FIG. 4 is a block diagram of another embodiment 12A of the signal processing unit 12 shown in FIG. 1 according to the present invention, which includes a main processing unit 60 and a process determining unit 62.

In the embodiment 12A according to the present invention, the main processing portion 60 shown in FIG. 4 receives at least one of the network information and the terminal information through an input port IN5 and the audio signal and/or the signal information through an input port IN6. The main processing unit 60 performs a number-of-channels adjusting process, a data selecting process, or a band reducing process on the audio signal according to the result of a determination performed in the process determining unit 62, and outputs the processed result to the output unit 14 through an output port OUT3.

The main processing unit 20 shown in FIG. 1 independently determines a type of a process to be applied to the audio signal according to at least one of the network information and the terminal information and processes the audio signal using the determined process. However, the main processing unit 60 shown in FIG. 4 processes the audio signal using the process determined in the process determining unit 62. Except for this difference, the main processing unit 60 shown in FIG. 4 is the same as the main processing unit 20 shown in FIG. 1. Therefore, the main processing unit 60 may be implemented as illustrated in FIG. 3. In case the main processing unit 60 is implemented as illustrated in FIG. 3, if the sub-processing unit 44 perceives using the results of the comparisons performed in the first and second comparison portions 40 and 42 that the audio signal should be processed using at lest one process among the number-of-channels adjusting process, the data selecting process, and the band reducing process. The sub-processing unit 44 processes the audio signal using the process determined by the process determining unit 62.

The process determining unit 62 shown in FIG. 4 determines a process to be performed among the number-of-channels adjusting process, the data selecting process, and the band reducing process according to at least one of the network information and the terminal information input through the input port IN5 and outputs the determined result to the main processing unit 60.

In an embodiment of the present invention, the process determining unit 62 may determine a process that enables the terminal to reproduce a highest quality audio signal, among the number-of-channels adjusting process, the data selecting process, and the band reducing process.

In another embodiment of the present invention, the process determining unit 62 may determine a process among the number-of-channels adjusting process, the data selecting process, and the band reducing process according to at least one additional information included in the audio signal input from the input unit 10. Here, the additional information may include at least one of user's preference and meta data. Meta data refers to data representing attributes of basic data of an audio signal, rather than the basic data of the audio signal themselves.

In another embodiment of the present invention, the process determining unit 62 may determine a process that ensures highest-quality audio signal reproduction and meets the additional information, among the number-of-channels adjusting process, the data selecting process, and the band reducing process.

To this end, according to the present invention, the process determining unit 62 may determine a process to be applied to the audio signal using a table. In this case, the process determining unit 62 may receive a table generated outside through an input port IN7. Alternatively, the processing determining unit 62 may generate a table using at least one of the terminal information and the network information input through the input port IN5 and the audio signal input through the input port IN6.

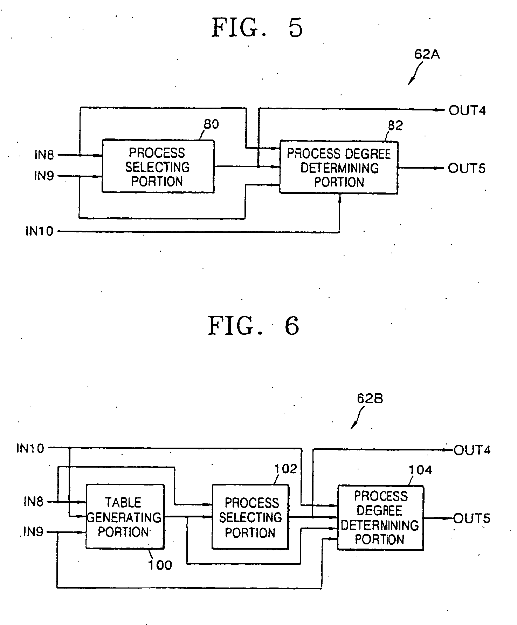

FIG. 5 is a block diagram of an embodiment 62A of the process determining unit 62 shown in FIG. 4, which includes a process selecting portion 80 and a process degree determining portion 82.

The process selecting portion 80 receives at least one of the network information and the terminal information through an input port IN8 and receives a table generated outside through an input port IN9.

In an embodiment of the present invention, in the table, at least one of the network information and the terminal information is mapped with at least one process among the number-of-channels adjusting process, the data selecting process, and the band reducing process. Accordingly, the process selecting portion 80 searches for a process corresponding to at least one of the network information and the terminal information received through the input port IN8 using the table, and outputs the searched process to the main processing unit 60 through an output port OUT4. To this end, the process selecting portion 80 may be implemented with a lookup table (not shown) containing corresponding processes as data and having addresses that are categorized according to at least one of the network information and the terminal information.

In another embodiment of the present invention, in the table, at least one of the network information and the terminal information and at least one of audio quality information and the additional information is mapped with at least one process among the number-of-channels adjusting process, the data selection process, and the band reducing process. Accordingly, the process selecting portion 80 searches for a process corresponding to at least one of the network information and terminal information input through the input port IN8 and at least one of the audio quality information and the additional information using the table, and outputs the searched process to the main processing unit 60 through the output port OUT4. To this end, the process selecting portion 80 may be implemented with a lookup table (not shown) containing corresponding processes as data and having addresses that are categorized according to at least one of the network information and the terminal information and at least one of the audio quality information and the additional information.

The main processing unit 60 receives information on the selected process output from the process selecting portion 80 through the output port OUT4 and processes the audio signal using the process perceived from the received information.

In an embodiment according to the present invention, the audio quality information, which may be included in the table, may be expressed as at least one of an objective difference grade (ODG) and a distortion index (DI). Here, the ODG and the Dl may be obtained using an objective measurement method known as perceptual evaluation of audio quality (PEAQ). A large ODG or Dl indicates small distortion. The PEAQ method is described in ITU-R Recommendation BS.1387. The ODG may range from -4 to 0, which corresponds to a 5-grade scale ranging from 1 to 5 according to ITU-R BS.562. The DI has the same meaning as the ODG but has an unlimited range. In general, high audio quality is expressed using the ODG, and low or intermediate audio quality is expressed using the Dl. That is, a table including high audio quality information may be formed using the ODG, and a table including low or intermediate audio quality information may be formed using the DI.

According to another embodiment of the present invention, the audio quality information contained in the table may be at least one of sound brightness, sound image wideness, and sound clearness. Sound brightness is related to the frequency, for example, frequency bandwidth, of an audio signal. Sound image wideness is related to audio quality according to the position of a sound source. For example, sound image wideness is greater for a stereo mode than a mono mode. Sound clearness is related to distortion noise.

According to the present invention, sound brightness, sound image wideness, and sound cleanness may be evaluated through a subjective listening test. This subjective listening test may be a MUSHRA (Multi Stimulus test with Hidden Reference and Anchors) or ITU-R Recommendation BS.1116 when testing music. In the subjective listening test, audio quality is evaluated as a whole without classification into sound brightness, sound image wideness, and sound clearness.

According to the present invention, sound brightness and sound clearness may be separately evaluated using an objective evaluation method. This objective evaluation method may be ITU-R Recommendation BS.1387 or may be performed using MOVs (Model Output Values) with feature extraction based PEAQ. For example, in the last stage of the objective evaluation method, the basic audio quality may be expressed using ODG or Dl by mapping extracted feature values, i.e., MOVs, with an overall value for the basic audio quality.

The process determining unit 62A shown in FIG. 5 may further include the process degree determining portion 82. When a process is selected in the process selecting portion 80, the process degree determining portion 82 determines a process degree using the table, which is externally input through the input port IN9, and at least one of the network information and the terminal information, which are input through the input port IN8, and outputs the determined process degree to the main processing unit 60 through an output port OUT5. Here, the process degree refers to at least one of the number of channels to be adjusted in the number-of-channels adjusting process, an amount of data to be selected from the audio signal in the data selecting process, and an amount of a high frequency component to be discarded from the audio signal in the band reducing process.

To this end, in the table input through the input port IN9, a degree of each process may be mapped with at least one of the network information and the terminal information. For example, the process degree determining portion 82 may be implemented with a lookup table (not shown) storing process degrees as data, which outputs data through the output port OUT5 to the main processing unit 60 in response to an address consisting of the process selected in the process selecting portion 80 and at least one of the network information and the terminal information, which are input through the input port IN8. Here, the main processing unit 60 processes the audio signal using the process degree determined in the process degree determining portion 82.

According to the present invention, the process degree determining portion 82 may check the type of the audio signal, determine a process degree using the checked result and the table, and may output the determined process degree to the main processing unit 60 through the output port OUT5. To this end, the process degree determining portion 82 may receive signal information that is indicative of the type of the audio signal through the input port IN10.

FIG. 6 is a block diagram of another embodiment 62B of the process determining unit 62 shown in FIG. 4 according to the present invention, which includes a table generating portion 100, a process selecting portion 102, a process degree determining portion 104.

Unlike the process determining unit 62A shown in FIG. 5, the process determining unit 62B shown in FIG. 6 further includes a table generating portion 100 to generate the table. Except for the inclusion of the table generating portion 100, the process determining unit 62B shown in FIG. 6 performs the same operation as the process determining unit 62A shown in FIG. 5. Accordingly, a process selecting portion 102 and a process degree determining portion 104 shown in FIG. 6 perform the same functions as the process selecting portion 80 and the process degree determining portion 82 shown in FIG. 5, respectively, and thus detailed descriptions thereon will be omitted here.

The table generating portion 100 shown in FIG. 6 generates the above-described various types of tables using at least one of the network information and the terminal information input through the input port IN8 and the audio signal input from the input unit 10 through the input port IN10, and outputs the generated tables to the process selecting portion 102. To this end, the table generating unit 100 may generate various types of tables according to, for example, ITU-R Recommendation BS.1387 using at least one of the network information and the terminal information and the audio signal.

Hereinafter, an audio signal processing method according to the present invention will now be described with reference to appended drawings.

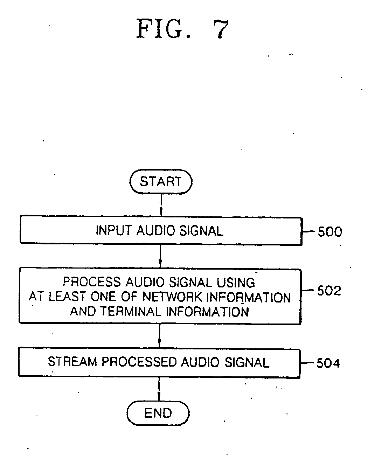

FIG. 7 is a flowchart illustrating an audio signal processing method according to the present invention, which includes processing an input audio signal using at least one of network information and terminal information to stream the processed audio signal (operations 500 through 504).

In the audio signal processing method according to the present invention, the audio signal is received in operation 500.

After operation 500, the audio signal is processed using at least one of the network information and the terminal information and signal information (operation 502). Here, the audio signal may be processed using at least one of a number-of-channels adjusting process, a data selecting process, a band reducing process according to at least one of the network information and the terminal information.

After Operation 502, the processed audio signal is streamed (operation 504).

Operations 500, 502, and 504 shown in FIG. 7 may be performed in the input unit 10, the signal processing unit 12, and the output unit 14 shown in FIG. 1, respectively.

The audio signal processing method illustrated in FIG. 7 may be performed in either a server side or a terminal or in both a server side and a terminal. For example, when the audio signal processing method illustrated in FIG. 7 is performed in a terminal, the audio signal processing method illustrated in FIG. 7 may be implemented with only operations 500 and 502.

With the assumption that the network information is an available bandwidth of the network, the terminal information is an allowable bitrate of the terminal, and the signal information is a bitrate of the audio signal, embodiments of Operation 502 illustrated in FIG. 7 according to the present invention will be described with reference to appended drawings.

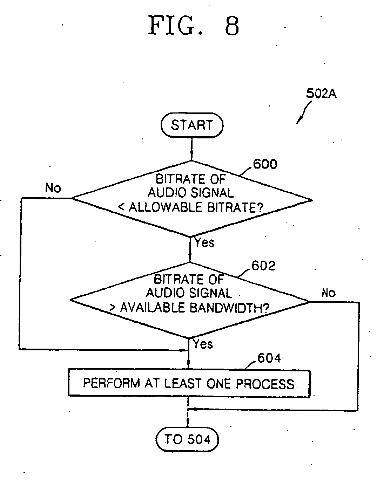

FIG. 8 is a flowchart illustrating an embodiment 502A of Operation 502 in FIG. 7 according to the present invention, which includes processing the audio signal using the results of comparisons between the bitrate of the audio signal, the allowable bitrate, and the available bandwidth (operations 600 through 604).

After operation 500, it is determined whether the bitrate of the audio signal is smaller than the allowable bitrate of the terminal (operation 600). If it is determined that the bitrate of the audio signal is smaller than the allowable bitrate, it is determined whether the bitrate of the audio signal is greater than the allowable bandwidth of the network (operation 602).

If it is determined that the bitrate of the audio signal is not greater than the available bandwidth of the network, the process goes to operation 504. In this case, the audio signal input in operation 500 is streamed, without performing any process on the audio signal.

However, if it is determined that the bitrate of the audio signal is not smaller than the allowable bitrate or that the bitrate of the audio signal is greater than the allowable bitrate, the audio signal is processed using at least one of the number-of-channels adjusting process, the data selecting process, and the band reducing process (operation 604).

According to the present invention, unlike the embodiment 502A of FIG. 8, operation 602 may be performed prior to operation 600. In this case, the process goes to operation 600 if it is determined that the bitrate of the audio signal is not greater than the allowable bandwidth and goes to operation 604 if it is determined that the bitrate of the audio signal is greater than the available bandwidth. Next, if it is determined in operation 600 that the bitrate of the audio signal is smaller than the allowable bitrate, the process goes to operation 504. Otherwise, if it is determined that the bitrate of the audio signal is not smaller than the allowable bitrate, the process goes to operation 604.

Operations 600 through 604 in FIG. 8 may be performed in the main processing unit 20 shown in FIG. 1 or in the main processing unit 60 shown in FIG. 4. Operations 600 through 602 may be performed in the second and first comparison portions 42 and 40, respectively. In this case, operation 604 is performed in the sub-processing portion 44 shown in FIG. 3.

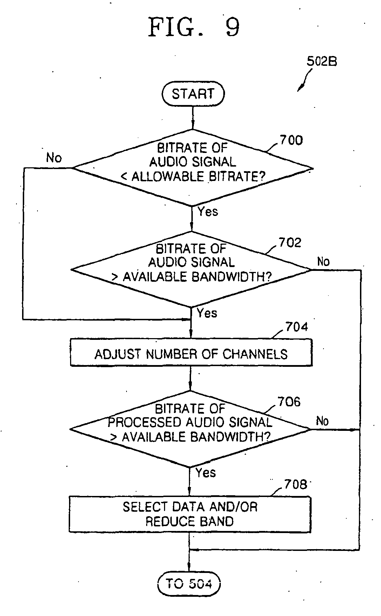

FIG. 9 is a flowchart illustrating an embodiment 502B of operation 502 in FIG. 7 according to the present invention, which includes processing the audio signal using the results of comparisons between the bitrate of the audio signal, the allowable bitrate, and the available bandwidth (operations 700 through 708).

Unlike the embodiment 502A illustrated in FIG. 8, in the embodiment 502B illustrated in FIG. 9, the number-of-channels adjusting operation is performed prior to the data selecting process or the band reducing process. The reason for performing the number-of-channels adjusting process prior to the data selecting process or the band reducing process lies in that, as described above, processing the audio signal using the number-of-channels adjusting process allows more data to be truncated from the audio signal than performing the audio signal using the data selecting process or the band reducing process.

After operation 500, it is determined whether the bitrate of the audio signal is smaller than the allowable bitrate of the terminal (operation 700). It is determined whether the bitrate of the audio signal is greater than the available bandwidth of the network if it is determined that the bitrate of the audio signal is smaller than the allowable bitrate (operaton 702). The number-of-channels adjusting process is performed if it is determined that the bitrate of the audio signal is greater than the available bandwidth or that the bitrate of the audio signal is not smaller than the allowable bitrate (operation 704). After operation 704, it is determined whether the bitrate of the audio signal processed using the number-of-channel-adjusting process is greater than the available bandwidth (operation 706). The audio signal is processed using at least one of the data selecting process and the band reducing process if it is determined that the bitrate of the audio signal processed using the number-of-channels adjusting process is greater than the available bitrate (operation 708).

However, if it is determined in operation 702 that the bitrate of the audio signal is not greater than the available bandwidth of the network, if it is determined in operation 706 that the bitrate of the audio signal processed using the number-of-channels adjusting process is not greater than the available bandwidth, the process goes to operation 504. In this case, the audio signal input in operation 500 is streamed, without performing any process on the audio signal (operation 504).

According to the present invention, unlike the embodiment 502B illustrated in FIG. 9, operation 702 may be performed prior to operation 70D. In this case, the process goes to operation 700 if it is determined in operation 702 that the bitrate of the audio signal is not greater than the available bandwidth and goes to operation 704 if it is determined that the bitrate of the audio signal is greater than the available bandwidth. Next, if it is determined in operation 700 that the bitrate of the audio signal is smaller than the allowable bitrate, the process goes to operation 504. Otherwise, if it is determined that the bitrate of the audio signal is not smaller than the allowable bitrate, the process goes to operation 704.

Operations 700 through 708 in FIG. 9 may be performed in the main processing unit 20 shown in FIG. 1 or in the main processing unit 60 shown in FIG. 4. Operation 700 may be performed in the second comparison portion 42, and operations 702 and 706 may be performed in the first comparison portion 40. In this case, operations 704 and 706 are formed in the sub-processing unit 44 shown in FIG. 3.

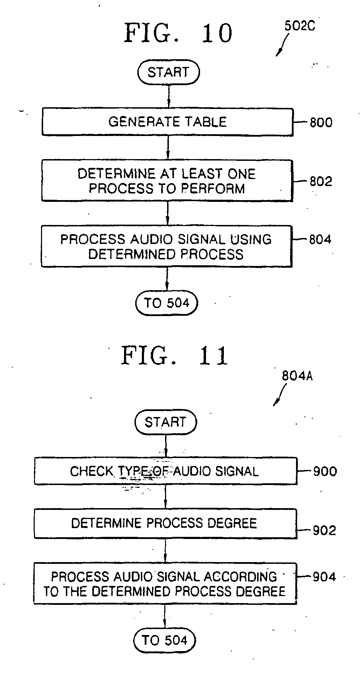

FIG. 10 is a flowchart illustrating another embodiment 502C of operation 502 in FIG. 7 according to the present invention, which includes processing the audio signal using a process that is determined using a table (operations 800 through 804).

First, a table as described above is generated using both the audio signal and at least one of the network information and the terminal information (operation 800). After operation 800, at least one process to be performed, among the number-of-channels adjusting process, the data selecting process, and the band reducing process, is determined using the table (operation 802). After operation 802, the audio signal is processed using the determined process (operation 804). According to the present invention, the embodiment 502C illustrated FIG. 10 may not include operation 800. In this case, a previously generated table is used.

According to the present invention, the embodiment 502C illustrated in FIG. 10 may be an embodiment of operation 604 in FIG. 8 or an embodiment of operation 708 in FIG. 9. In this case, operation 800 illustrated in FIG. 10 may be performed in the table generating portion 100 shown in FIG. 6. Operation 802 may be performed in the process determining unit 62 shown in FIG. 4, the process selecting portion 80 shown in FIG. 5, or the processing type selecting portion 102 shown in FIG. 6. Operation 804 may be performed in the main processing unit 60 shown in FIG. 4.

FIG. 11 is a flowchart illustrating an embodiment 804A of operation 804 in FIG. 10 according to the present invention, which includes determining a process degree according to the type of the audio signal (operations 900 through 904).

After operation 802, the type of the audio signal is checked using the signal information (operation 900). After operation 900, the process degree is determined as described above using the checked result and the table (operation 902). After operation 902, the audio signal is processed according to the determined process degree, and the process goes to operation 504 (operation 904). Here, operations 900 and 902 illustrated in FIG. 11 may be performed in the process degree determining portion 82 shown in FIG. 5 or in the process degree determining portion 104 shown in FIG. 6. Operation 904 may be performed in the main processing unit 60 shown in FIG. 4.

Hereinafter, a computer readable recording medium storing a computer program according to the present invention will be described.

A computer readable recording medium according to the present invention, which stores at least one computer program for controlling the above-describe audio signal processing apparatus for processing an audio signal to be reproduced by a terminal connected to a network, stores a computer program for receiving the audio signal and processing the audio signal using at least one of the network information and the terminal information and the signal information. The computer program stored in the computer readable recording medium may cause a computer to effect streaming the processed audio signal.

Here, processing the audio signal may include determining at least one process to be performed, among the number-of-channels adjusting process, the data selecting process, and the band reducing process, according to at least one of the network information and the terminal information, and processing the audio signal using the determined process.

In an embodiment of the present invention, processing the audio signal may include determining whether the bitrate of the audio signal is smaller than the bitrate of the terminal, which corresponds to a kind of terminal information, determining whether the bitrate of the audio signal is greater than the available bandwidth of the network if it is determined that the bit rate of the audio signal is smaller than the allowable bitrate, and performing at least one of the number-of-channels adjusting process, the data selecting process, and the band reducing process if it is determined that the bitrate of the audio signal is not smaller than the allowable bitrate or that the bitrate of the audio signal is greater than the available bandwidth.

In another embodiment of the present invention, processing the audio signal may include determining whether the bit rate of the audio signal is smaller than the allowable bitrate of the terminal, determining whether the bitrate of the audio signal is greater than the available bandwidth of the network if it is determined that the bitrate of the audio signal is smaller than the allowable bitrate, performing the number-of-channels adjusting process if it is determined that the bitrate of the audio signal is greater than the available bandwidth or that the bitrate of the audio signal is not smaller the allowable bitrate, determining whether the bitrate of the audio signal processed using the number-of-channels adjusting process is greater than the available bandwidth, and performing at least one of the data selecting process and the band reducing process if it is determined that the bitrate of the audio signal processed using the number-of-channels adjusting process is greater than the available bandwidth.

Alternatively, processing the audio signal may include determining at least one process among the number-of-channels adjusting process, the data selecting process, and the band reducing process using the table and processing the audio signal using the determined process. Here, processing the audio signal may further include generating the table using at least one of the network information and the terminal information and the audio signal.

Processing the audio signal may include determining a process degree using the table and processing the audio signal according to the determined process degree. In this case, processing the audio signal may include checking the type of the audio signal, determining the process degree using the checked result and the table, and processing the audio signal according to the determined process degree.

In conclusion, an audio signal processing apparatus according to the present invention and processes performed in each element of various embodiments of the audio signal processing apparatus may be implemented using software, which is stored in a computer readable recording medium and is run to control a computer.

The above-described audio signal processing apparatus and method and the computer readable recording medium therefor according to the present invention can be applied for MPEG-21 DIA (Digital Item Adaptation).

Hereinafter, for the convenience of understanding the present invention, an exemplary application of an audio signal processing apparatus and method according to the present invention applied to MEPG-21 DIA will be described with reference to appended drawings, in which the number-of-channels adjusting process is denoted as "ChannelDropping", the data selecting process as "audioFGS", and the band reducing process as "spectralBandReduction".

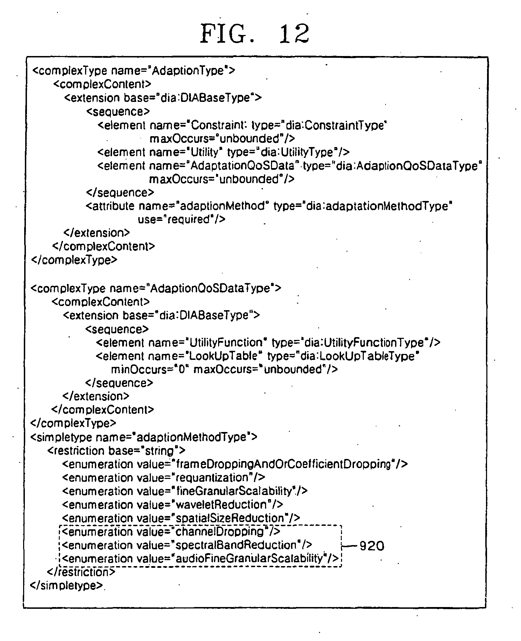

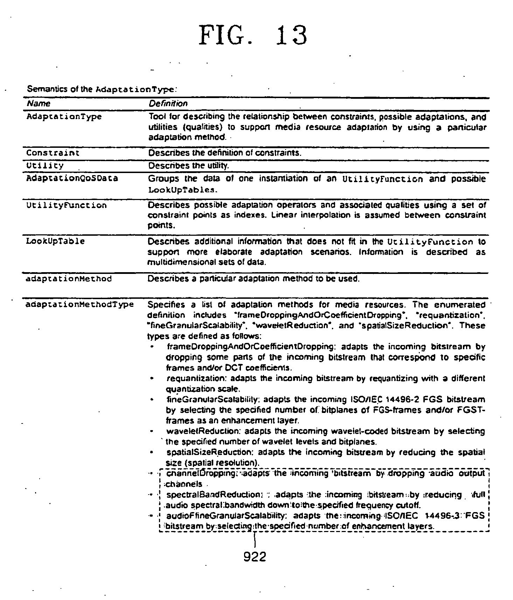

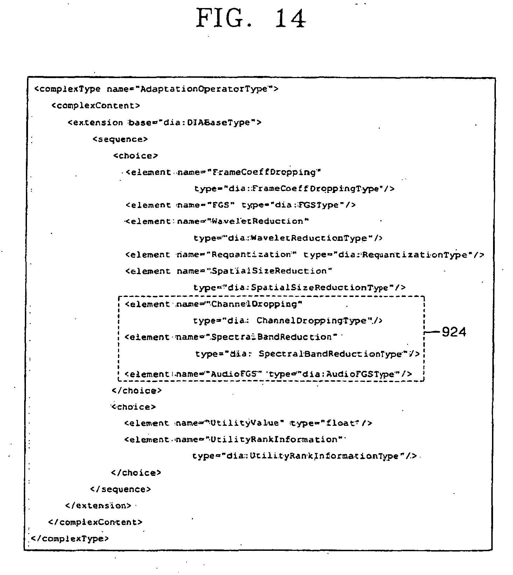

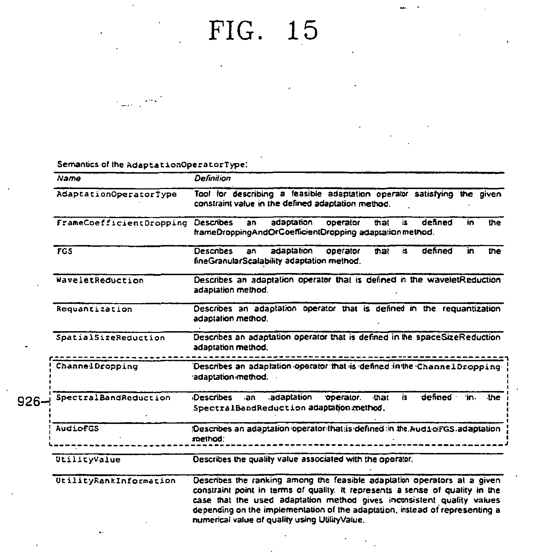

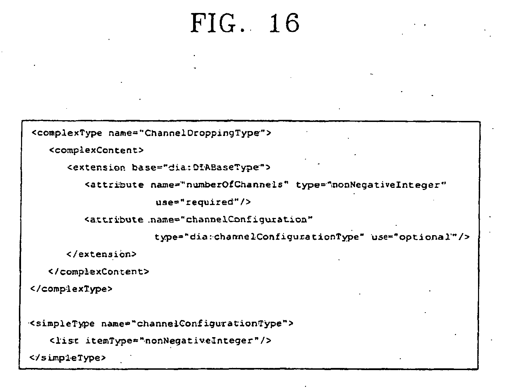

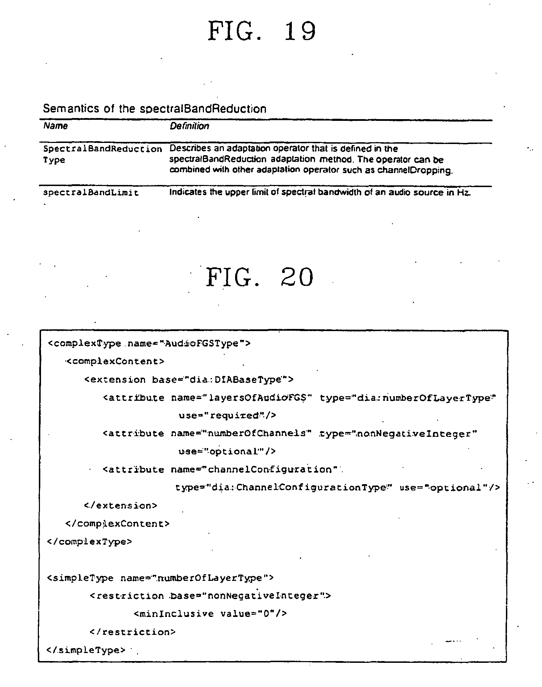

FIGS. 12 through 21 illustrate embodiments of syntax and sematics in a language used in MPEG-21 for audio adaptation.

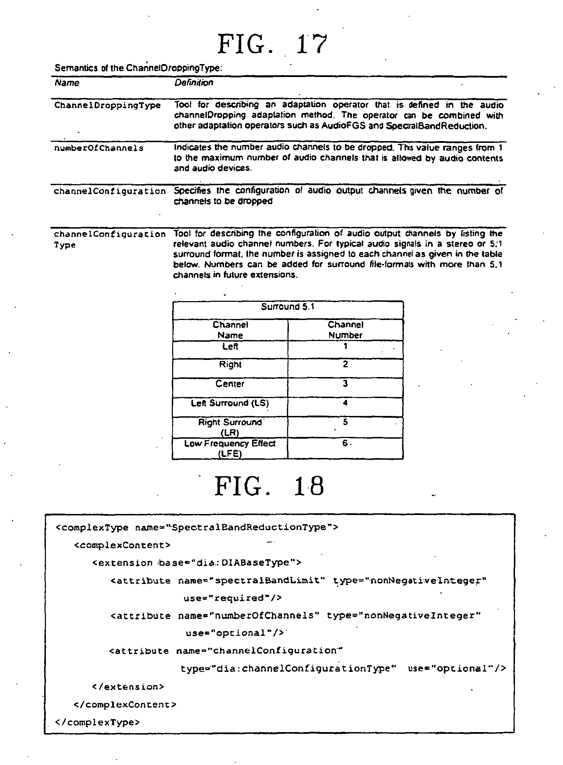

In FIGS. 12 through 21, boxed portions 920, 922, 924, and 926 were lead by the audio signal processing apparatus and method according to the present invention. For example, when an audio signal is transmitted in a 5.1 surround mode, channel number may be allocated to each channel as illustrated in FIG. 17. However, the present invention is not limited to this mode and can be applied to a 5.1 or greater multi-channel mode. In this case, the number-of-channels adjusting process may be implemented as attributes of the data selecting process and the band reducing process.

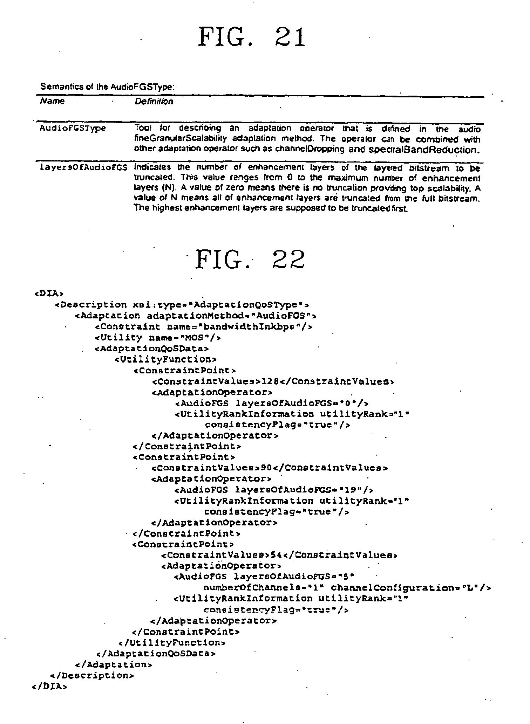

FIG. 22 illustrates an embodiment of the number-of-channels adjusting process according to the present invention.

The number-of-channels adjusting process may be expressed as, for example, in FIG. 22 when it is implemented as attributes of the data selecting process. In the embodiment illustrated in FIG. 22, it is assumed that the signal processing unit 12 performs the data selecting process when the initial available bandwidth of the network is 128 kbps and reduces to, for example, 90 kbs, and performs the number-of-channels adjusting process when the available bandwidth reduces to, for example, 54 kbps.

Hereinafter, for the convenience of understanding the present invention, an exemplary application of an audio signal processing apparatus and method according to the present invention applied to MEPG-21 DIA will be described with reference to appended drawings, in which the number-of-channels adjusting process is denoted as "ChannelDropping", the data selecting process as "ScalableAudio", and the band reducing process as "SpectralBandReduction".

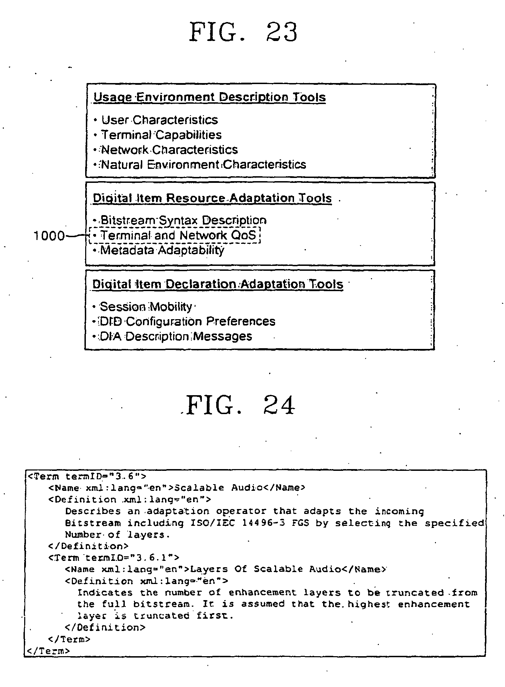

FIG. 23 illustrates an organization of tools for MPEG-21 DIA. As illustrated in FIG. 23, there are three kinds of MPEG-21 DIA tools. In the organization illustrated in FIG. 23, an audio signal processing apparatus and method according to the present invention may be applied to provide Terminal and Nnetwork QoS (Quality of Service) 1000.

FIG. 24 illustrates the contents of a data selecting process adopted in "Study of ISO/IEC 21000-7 FCD-Part 7: Digital Item Adaptation, ISO/IEC JTC1/SC29/WG11/N5933, represented in October 2003 in Brisbane, Austria, and "ISO/IEC 21000-7 FDIS-Part 7: Digital Item Adaptation, Adaptation QoS Typeification Scheme of ISO/IEC JTC1/SC29/WG11/N6168, represented in December 2003 in Hawaii. In FIG. 24, "termID" represents term IDs according to a classification scheme.

When the network information is the available bandwidth of the network, measured in kbps, the terminal information is the computation time of the terminal, measured in milliseconds, and sound quality is expressed as a signal-to-noise ratio using a mean opinion score (MOS), the data selecting process performed in the signal processing unit 12 may be expressed as illustrated in FIG. 24.

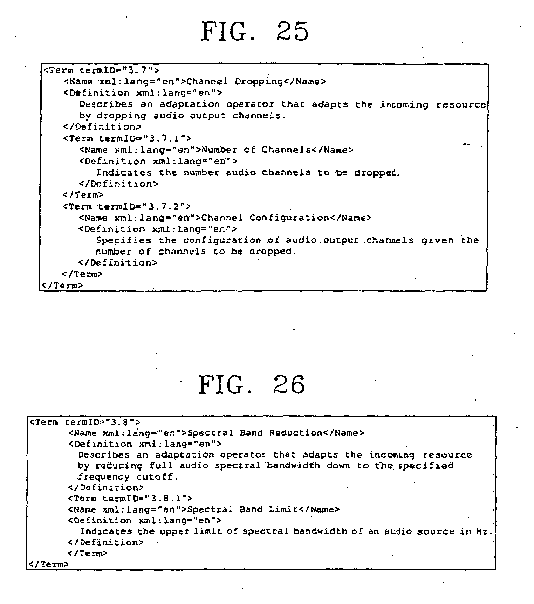

FIG. 25 illustrates the contents of a number-of-channels adjusting process adopted in "Study of ISO/IEC 21000-7 FCD-Part 7: Digital Item Adaptation, ISO/IEC JTC1/SC29/WG11/N5933, represented in October 2003 in Brisbane, Austria, and "ISO/IEC 21000-7 FDIS-Part 7: Digital Item Adaptation, Adaptation QoS Classification Scheme of ISO/IEC JTC1/SC29/WG11/N6168, represented in December 2003 in Hawaii.

For example, when an audio signal is transmitted in a 5.1 surround mode and the terminal supports only a stereo mode, the number of channels to be dropped may be set to 4 using the number-of-channels adjusting process performed in the signal processing unit 12, and the type of the channel may be set to be a left channel, designated by "L", a right channel, designated by "R, or a surround channel, designated by "S". On the other hand, when an audio signal is transmitted in a stereo mode, the number of channels to be dropped may be set to "1" and the type of the channel may be set to be a mono channel, represented by "M". The number-of-channel adjusting process may be expressed as in FIG. 25.

FIG. 26 illustrates the contents of a band reducing process adopted in "Study of ISO/IEC 21000-7 FCD-Part 7: Digital Item Adaptation, ISO/IEC JTC1/SC29/WG11/N5933, represented in October 2003 in Brisbane, Austria, and "ISO/IEC 21000-7 FDIS-Part 7: Digital Item Adaptation, Adaptation QoS Classification Scheme of ISO/IEC JTC1/SC29/WG11/N6168, represented in December 2003 in Hawaii. For example, the band reducing process may be expressed as in FIG. 26.

Hereinafter, embodiments of the above-described tables that may be used in an audio signal processing apparatus and method and a computer readable recording medium therefor according to the present invention will be described with reference to appended drawings, with the assumption that the network is CDMA2000 1 x.

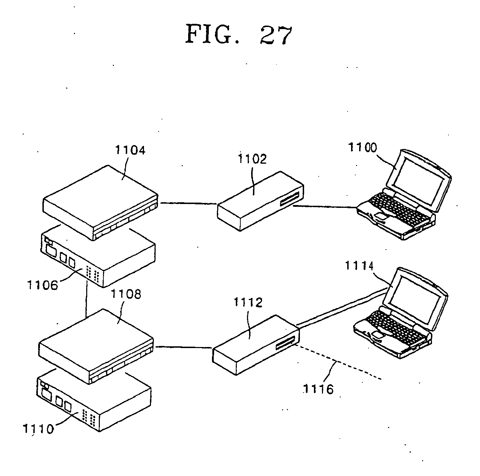

FIG. 27 illustrates a configuration of a general streaming system, which includes a server 1100, switching hubs 1102 and 1112, routers 1104 and 1108, controllers 1106 and 1110, a terminal 1114, and a network 1116

The server 1100 shown in FIG. 27 may include the signal processing apparatus shown in FIG. 1. The terminal 1114 is connected to the network 1116 by the switching hub 1112. Here, it is assumed that the server 1100 generates dummy packets and transmits them to the terminal 1114 when the network 1116 has an available bandwidth as illustrated in FIG. 2, that the bitrates of the dummy packets vary from 4 kbps to 86 kbps, that an audio signal processed using the data selecting process in the server 1100 is a MPEG-4 BSAC bitstream, and that an audio signal not processed using the data selecting process is an MPEG-4 AAC bitstream. It is also assumed that there are three kinds of audio signals: popular music, news, and classical music. It is also assumed that a top layer of the BSAC bitstream is made to provide a maximum available bandwidth of the network CDMA2000 1x, for example, of 86 kbps per channel, lower layers of the BSAC stream may provide the functionality of fine grain scalability (FGS) with a step size of 1 kbps per channel, and the AAC stream is encoded at 86 kbps.

In this case, although the available bandwidth varies over time, the BSAC bitstream can be streamed without having a buffering period of time when reproduced in the terminal 1114. However, frequent interrupts occurs in the AAC bitstream. Seamless data reproduction using the data selecting process performed in the signal processing unit 12 can be achieved at the sacrifice of sound quality.

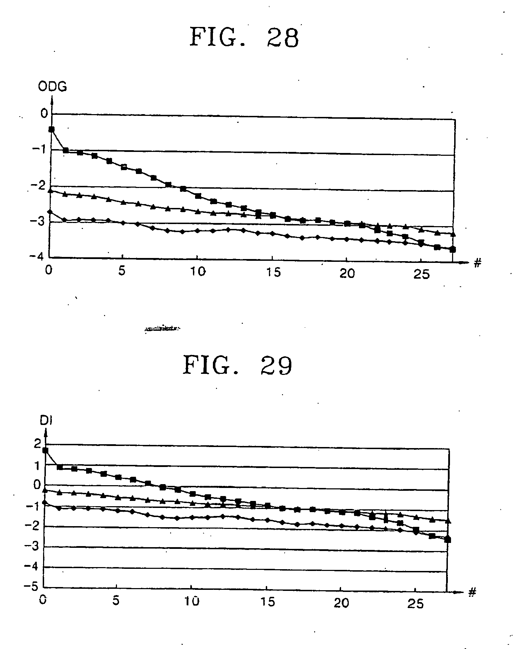

FIG. 28 is a graphical illustration of a table including sound quality information expressed using an objective difference grade (ODG), according to an embodiment of the present invention. In FIG. 28, the horizontal axis represents the number (#) of layers truncated using the data selecting process, and the vertical axis represents the ODG. FIG. 29 is a graphical illustration of a table including sound quality information expressed using a distortion index (DI), according to an embodiment of the present invention. In FIG. 29, the horizontal axis represents the number (#) of layers truncated using the data selecting process, and the vertical axis represents the DI. In FIGS. 28 and 29, ■ denotes a news audio signal, ◆ denotes a popular music audio signal, and ▲ denotes a classical music audio signal.

The graphs of FIGS. 28 and 29 are considered to be a kind of tables. For example, a table that can be expressed as the graph of FIG. 28 or 29 may store at least one of the network information and the terminal information, sound quality information expressed as the ODG and/or DI, and the number (#) of layers to be truncated by the data selecting process, which are matched with each other. The process degree determining portion 82 of FIG. 5 or the process degree determining portion 104 of FIG. 6 may determine a process degree to the audio signal using the graph of FIG. 28 or 29. For example, when the data selecting process is determined as a process to be applied to the audio signal in the process selecting portion 80 or 102 of the process determining unit 62, the process degree determining portion 82 or 104 receives at least one of the network information and the terminal information through the input port IN8 and searches an ODG value in the table of FIG. 28 or a DI value in the table of FIG. 29, which corresponds to the sound quality mapped with at least one of the received network information and terminal information. Here, the process degree determining portion 82 or 104 also searches as a process degree the number (#) of layers to be truncated in the table of FIG. 28 or 29, which matches the searched ODG value or DI value.

The main processing unit 60 discards enhancement layer of the audio signal according to the process degree determined in the process degree determining portion 82 or 104. When the process degree determining portion 82 or 104 determines the process degree, the type of the audio signal, i.e., whether the audio signal is news, popular music, or classical music, may be considered.

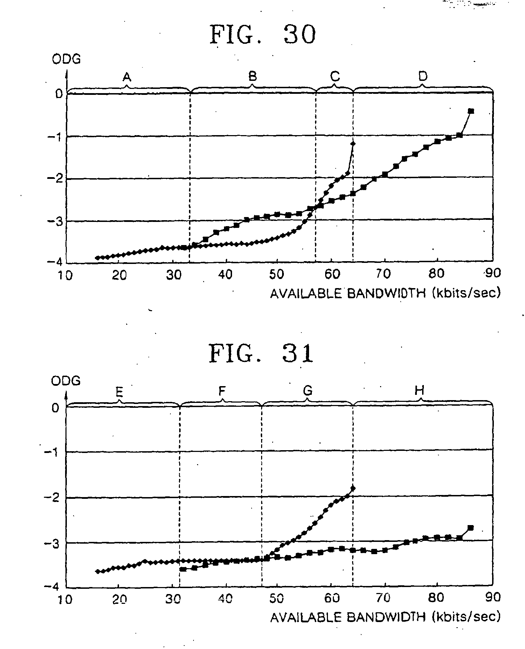

FIG. 30 is a graphical illustration of a table including sound quality information of news expressed using an ODG, according to an embodiment of the present invention. In FIG. 30, the horizontal axis represents the available bandwidth of the network in kbps, and the vertical axis represents the ODG.

FIG. 31 is a graphical illustration of a table including sound quality information of a piece of popular music expressed using an ODG, according to an embodiment of the present invention. In FIG. 31, the horizontal axis represents the available bandwidth of the network in kbps, and the vertical axis represents the ODG.

In FIGS. 30 and 31, sound quality that is expected when the signal processing unit 12 processes the audio signal only using the data selecting process is denoted by ■, sound quality that is expected when the signal processing unit 12 processes the audio signal using both of the data selecting process and the number-of-channels adjusting process is denoted by ◆.

The graphs of FIGS. 30 and 31 are considered to be a kind of tables. For example, a table that can be expressed as the graph of FIG. 30 or 31 may store the available bandwidth, which corresponds to the network information, the type of the audio signal, which corresponds to the signal information, and sound quality information expressed using the OSG, which are matched with each other. The process determining unit 62 shown in FIG. 4 may determine the type of a process to be applied to the audio signal using the graph of FIG. 30 or 31. Here, the process determining unit 62 may receives a table corresponding to the graph of FIG. 30 and/or FIG. 31 through the input port IN7 or may generate a table corresponding to the graph of FIG. 30 and/or FIG. 31 using at least one of the network information and the terminal information, which are input through the input port IN5, and the audio signal input through the input port IN6.

Initially, the process determining unit 62 determines whether the audio signal is news or popular music using the signal information received through the input port IN6. If it is determined that the audio signal is news, the process determining unit 62 may determine the type of a process to be applied to the audio signal using the graph of FIG. 30. However, if it is determined that the audio signal is popular music, the process determining unit 62 may determine the type of a process to be applied to the audio signal using the graph of FIG. 31. As such, when a graph to be referred to is determined according to the type of the audio signal, the process determining unit 62 determines whether the available bandwidth, which is the network information received through the input port IN5, belongs to which range of the available bandwidth of FIG. 30 or FIG. 31, i.e., among ranges A, B, C, and D of FIG. 30 or among ranges E, F, G, and H of FIG. 31.

If it is determined that the available bandwidth input through the input port IN5 belongs to range A of FIG. 30 or range E of FIG. 31, in which only mark ◆ appears, the process determining unit 62 determines both the data selecting process and the number-of-channels adjusting process as processes to be applied to the audio signal. However, if it is determined that the available bandwidth input through the input port IN5 belongs to range D of FIG. 30 or range H of FIG. 31, in which only mark ■ appears, the process determining unit 62 determines only the data selecting process as a process to be applied to the audio signal.

However, if it is determined that the available bandwidth input through the input port IN5 belongs to range B or C of FIG. 30 or range F or G of FIG. 31, in which both marks ■ and ◆ appear, the process determining unit 62 selects one of marks ■ and ◆ with a greater ODG indicating higher sound quality. For example, when the available bandwidth belongs to range B of FIG. 30, plot ■ has a greater ODG that yields higher sound quality than plot ◆, so that the process determining unit 62 determines the data selecting process as a process to be applied to the audio signal. However, when the available bandwidth belongs to range C of FIG. 30 of range F or G of FIG. 31, plot ◆ has a greater ODG that yields higher sound quality than plot ■, the process determining unit 62 determines both the data selecting process and the number-of-channels adjusting process as processes to be applied to the audio signal. Next, the main processing unit 60 processes the audio signal using the process determined in the process determining unit 62.

FIG. 23 illustrates an embodiment of a table according to the present invention, which is expressed in XML used in MPEG-21. The table of FIG. 23 includes an available bandwidth (BANDWIDTH) region 1200, which is related to the network information, a data selecting process (SCALABLE_AUDIO) region 1202, number-of-channels adjusting regions 1204 and 1206, and a sound quality (Utility) region 1208.

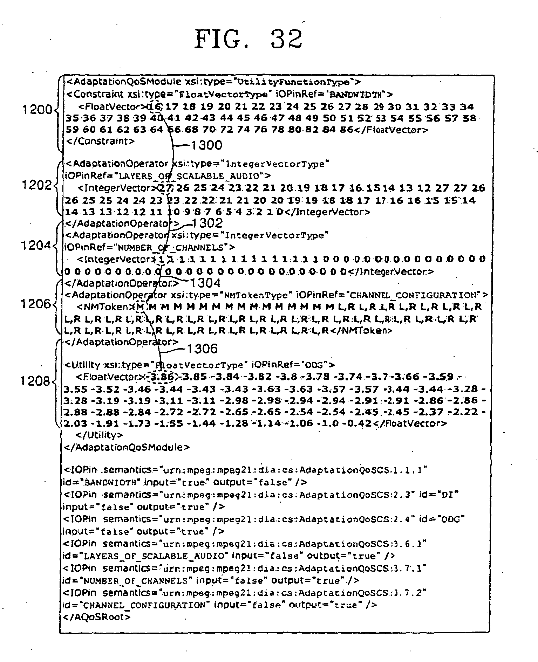

In the available bandwidth region 1200 of FIG. 32, available bandwidth values are expressed using float vectors. In the data selecting process region 1202, the number of enhancement layer to be truncated is expressed using integer vectors. In the number-of-channels adjusting region 1204, the number of channels to be dropped is expressed using integer vectors. In the number-of-channels adjusting region 1206, the configurations of channels are expressed. In the sound quality region 1208, sound quality graded using the ODG is expressed using float vectors. Regarding the configurations of channels expressed in the number-of-channels adjusting region 1206, "M" denotes a mono channel, "L" denotes a left channel, and "R" denotes a right channel.

In the table of FIG. 32, available bandwidths, a degree of process in data selecting processes, a degree of process in number-of-channels adjusting processes, and sound quality values are one-to-one matched. For example, an available bandwidth of 16 matches a process degree of 27 in the data selecting process, as indicated by an arrow 1300, the process degree of 27 matches a value of 1, which corresponds to the number of channels to be dropped, as indicated by an arrow 1302, the value of 1, which corresponds to the number of channels to be dropped, matches a mono channel M, as indicated by an arrow 1304, and the mono channel M, which indicates a configuration of the channel, matches a sound quality value of - 3.86, as indicated by an arrow 1306.

When the type of the terminal is a personal computer, enhancement layers of a BSAC bitstream having a bitrate of 64 kbps per channel are provided to the terminal, and the data processing capability, for example, computation time, of the terminal, which is provided as the terminal information, is calculated using Entrek Toolbox software, embodiments of tables that may be used to process the audio signal will be described as follows with reference to appended drawings.

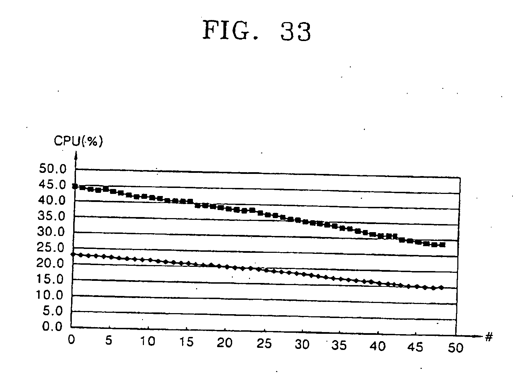

FIG. 33 is a graphical illustration of a table according to an embodiment of the present invention. In FIG. 33, the horizontal axis represents the number (#) of layers to be truncated using the data selecting process, and the vertical axis represents the percentage of data processing capability of the terminal, particularly, its computation time. ◆ denotes a mono audio signal, and ■ denotes a stereo audio signal.

The graph of FIG. 33 is considered to be a kind of table. For example, a table that can be expressed as the graph of FIG. 33 may store the computation time (CPU%) of the terminal, which corresponds to the terminal information, the type of the audio signal, which corresponds to the signal information, and the number of layers to be truncated using the data selecting process, which are matched with each other. For example, when the data selecting process is determined in the process selecting portion 80 or 102 as a process to be applied to the audio signal, the process degree determining portion 82 of FIG. 5 or the process degree determining portion 104 of FIG. 6 may determine a process degree, which corresponds to the number (#) of layers to be truncated from the audio signal, using the graph of FIG. 33. For example, the process degree determining portion 82 or 104 receives the terminal information through the input port IN8 and searches the number (#) of layers to be truncated, which is mapped with the computation time of the terminal of the received terminal information, in the table. The process degree determining portion 82 or 104 outputs the searched process degree (#) to the main processing unit 60. Next, the main processing unit 60 truncates the number of enhancement layers of the audio signal according to the process degree (#) searched by the process degree determining portion 82 or 104. In this case, when the process degree determining portion 82 or 104 determines the process degree, whether the audio signal is a mono type, a stereo type, or a multi-channel type may be considered.

Hereinafter, when the signal processing unit 12 truncates enhancement data in units of bits, not in units of layers, in the data selecting process, an audio signal processing apparatus and method and a computer readable recording medium therefor according to the present invention will be described.

According to the present invention, generic bitstream descriptions (gBSD) can be applied to an MPEG-4 BSAC audio signal. This BSAC audio signal may be processed using the data selecting process, as described above. In this case, all enhancement layers of the audio signal can be fully truncated in units of bits, but the lengths of base layers do not vary. The non-varying lengths of the layers provide significant information in a decoding process and need to be updated during the data selecting process. In addition, the compressed BSAC audio signal starts with a header, which remains unchanged when performing the data selecting process.

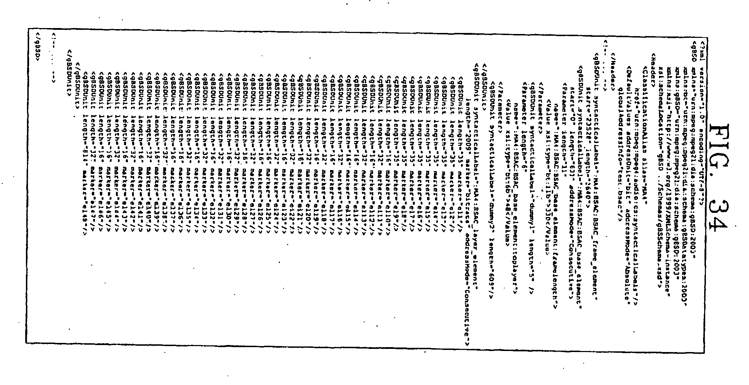

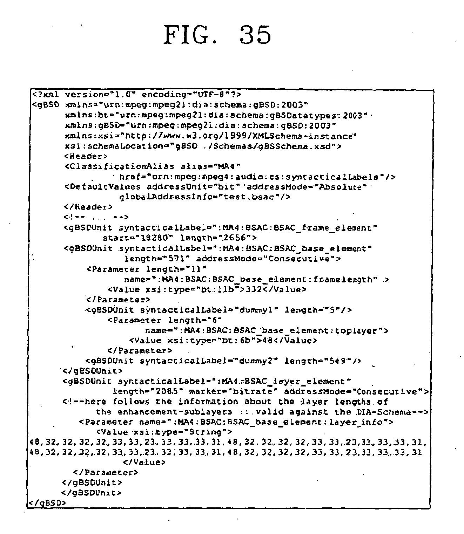

FIG. 34 illustrates an embodiment of gBSD on a BSAC audio signal, according to the present invention, using a language used in MPEG-21. FIG. 35 illustrates another embodiment of gBSD on a BSAC audio signal according to the present invention using a language used in MPEG-21.

Referring to FIGS. 34 or 35, it is apparent how similar the descriptions of the bitstreams are and that frames are addressed in an absolute mode and layers are addressed in a relative mode. In a subunit with a marker "bitrate", enhancement layers are listed. Therefore, enhancement layers to be truncated can be identified using the marker when the data selecting process is performed.

When a bitstream, i.e., a compressed audio signal, is processed, sampling frequency, number of channels, and window length are no longer required, and only the number and the IDs of enhancement data to be truncated in the data selecting process are required. Frames are truncated according to offsets signaled by relative sizes of enhancement layers, and parameters such as frame-size and top-layer are adapted. In this case, when enhancement data are truncated in units of bits in the data selecting process according to present invention and the boundary between a truncated bit and a non-truncated bit matches the boundary between layers, sound quality can be enhanced.

As described above, in an audio signal processing apparatus and method and a computer readable recording medium according to the present invention, an audio signal can be efficiently streamed using real-time network information and/or terminal information, which vary at any time, so that the audio signal transmitted from, for example, a server side, can be seamlessly received by a terminal and can be reproduced at optimal, high sound quality by the terminal.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. An apparatus for processing an audio signal to be reproduced in a terminal connected to a network, the apparatus comprising;
an input unit (10) that receives the audio signal; and
a signal processing unit (12) arranged to process the audio signal received from the input unit using a relationship between at least one of network information terminal information and signal information, and at least one of a plurality of processes to be processed by the audio signal,
wherein the network information refers to information regarding the network, , the terminal information refers to information regarding the terminal, and the signal information refers to information on the audio signal.

2. The apparatus of claim 2, further comprising an output unit (14) that streams the processed audio signal.

3. The apparatus of claim 1 or 2, wherein the signal processing unit comprises a main processing unit (20) arranged to process the audio signal using at least one of a number-of-channels adjusting process of adjusting the number of channels of the audio signal, a data selecting process of selecting some data included in the audio signal, and a band reducing process of discarding a high frequency component of the audio signal, according to at least one of the network information and the terminal information.

4. The apparatus of claim 3, wherein the network information includes information regarding the status of the network, the terminal information includes information regarding at least one of the capability, the type, and the status of the terminal, and the signal information includes information regarding a bitrate of the audio signal.

5. The apparatus of claim 4, wherein the information regarding the status of the network includes at least one of an available bandwidth of the network, the static capability of the network, and the time-varying conditions of the network;
the terminal information includes information regarding at least one of an allowable bitrate of the terminal, the data processing capability of the terminal, the power of the terminal, the storage capability of the terminal, and the type of the terminal; and
the signal information further includes the type of the audio signal.

6. The apparatus of any of claims 3 to 5, wherein the main processing unit (20) receives a compressed audio signal from the input unit and processes the compressed audio signal using the data selecting process.

7. The apparatus of claim 6, wherein the compressed audio signal is a bitstream with a functionality of fine grain scalability.

8. The apparatus of claim 7, wherein the compressed audio signal includes at least one of a Bit Sliced Arithmetic Coding (BSAC) bitstream and an Advanced Audio Coding Scalable (AAC) bitstream.

9. The apparatus of any of claims 3 to 5, wherein the main processing unit (20) is arranged to receive a compressed audio signal or an uncompressed audio signal from the input unit and to process the audio signal using the number-of-channels adjusting process and the band reducing process.

10. The apparatus of claim 3, 4, 5 or 9, wherein the main processing unit (20) is arranged to select only a portion of the data in units of bits when performing the data selecting process.

11. The apparatus of claim 3, 4, 5 or 9, wherein the main processing unit (20) is arranged to select a portion of the data in units of layers when performing the data selecting process.

12. The apparatus of any of claims 3 to 11, wherein the main processing unit (20) comprises:
a first comparison portion (40) that compares the signal information and the network information;
a second comparison portion (42) that compares the signal information and the terminal information; and
a sub-processing portion (44) that processes the audio signal input through the input unit in response to the results of the comparisons performed in the first and second comparison portions.

13. The apparatus of any of claims 3 to 12, wherein the signal processing unit is arranged to select a non-enhancement portion as the data included in the audio signal according to at least one of the network information and the terminal information when performing the data selecting process.

14. The apparatus of any of claims 3 to 13, wherein the signal processing unit is arranged to adjust the number of channels of the audio signals by dropping the number of channels of the audio signals according to at least one of the network information and the terminal information when performing the number-of-channels adjusting process.

15. The apparatus of claim 3, wherein the signal processing unit further comprises a process determining unit (62) arranged to determine a process to be applied to the audio signal, among the number-of-channels adjusting process, the data selecting process, and the band reducing process, according to at least one of the network information and the terminal information, and the main processing unit (20) processes the audio signal using the process determined in the process determining unit.

16. The apparatus of claim 15, wherein the process determining unit (62) is arranged to determine a process among the number-of-channels adjusting process, the data selecting process, and the band reducing process, according to at least one of sound quality information and additional information included in the audio signal input from the input unit.

17. The apparatus of claim 16, wherein the additional information corresponds to at least one of user preference information and meta data.

18. The apparatus of claim 15, 16 or 17, wherein the process determining unit (67) comprises a process selecting portion that is arranged to select the type of a process to be applied to the audio signal from among the number-of-channels adjusting process, the data selecting process, and the band reducing process using a table that maps at least one of the network information and the terminal information to at least one of the number-of-channels adjusting process, the data selecting process, and the band reducing process.

19. The apparatus of claim 16, wherein the process determining unit (62) comprises a process selecting portion (80, 102) that is arranged to select the types of a process to be applied to the audio signal from among the number-of-channels adjusting process, the data selecting process, and the band reducing process using a table that maps at least one of the network information and the terminal information and at least one of the sound quality information and the additional information to at least one of the number-of-channels adjusting process, the data selecting process, and the band reducing process.

20. The apparatus of claim 19, wherein the table including the sound quality information is generated using at least one of an objective difference grade and a distortion index.

21. The apparatus of claim 20, wherein a table including high audio quality information is generated using the objective difference grade, and a table including low or intermediate audio quality information is generated using the distortion index.

22. The apparatus of claim 19, wherein the table including the sound quality information is generated using at least one of sound brightness, which is related to the frequency of the audio signal, sound image wideness, which is related to sound quality according to the position of a sound source, and sound clearness, which is related to distortion noise.

23. The apparatus of claim 22, wherein the sound brightness, the sound image wideness, and the sound cleanness are evaluated using a subjective listening test.

24. The apparatus of claim 23, wherein the subjective listening test is a multi-stimulus test with hidden reference and anchors.

25. The apparatus of claim 23, wherein the subjective listening test is ITU-R Recommendation BS.1116.

26. The apparatus of claim 22, wherein the sound brightness and the sound clearness are separated evaluated using an objective evaluation method.

27. The apparatus of claim 26, wherein the objective evaluation method is ITU-R Recommendation BS.1387.

28. The apparatus of any of claims 18 to 27, wherein the process determining unit (62) further comprises a process degree determining portion (82, 104) arranged to determine a process degree, which is at least one of the number of channels to be adjusted in the number-of-channels adjusting process, an amount of data to be selected in the data selecting process, and an amount of a high frequency component to be discarded from the audio signal in the band reducing process, using the table that maps the number of channels to be adjusted, the amount of data to be selected, and the amount of the high frequency component to be discarded to at least one of the network information and the terminal information; and
the main processing unit (20) processes the audio signal using the process degree determined in the process degree determining portion.

29. The apparatus of claim 28, wherein the process degree determining portion (82, 104) checks the type of the audio signal and determined the process degree using the checked result and the table.

30. The apparatus of any of claims 18 to 29, wherein the process determining unit (62) further comprises a table generating portion (100) that is arranged to generate the table using at least one of the network information and the terminal information and the audio signal received from the input unit and outputs the generated table to the process selecting portion.

31. The apparatus of claim 30, wherein the table generation portion (100) generates the table according to the audio signal and the at least one of the network information and the terminal information using ITU-R Recommendation BS.1387.

32. Use of the apparatus of any of claims 1 to 31, being applied to MPEG-21.

33. A method of processing an audio signal to be reproduced in a terminal connected to a network, the method comprising:
receiving (500) the audio signal; and
processing (502) the audio signal using a relationship between at least one of network information and terminal information and signal information and at least one of a plurality of processes to be processed in the audio signal,
wherein the network information refers to information regarding the network, the terminal information refers to information regarding the terminal, and the signal information refers to information on the audio signal.

34. The method of claim 33, further comprising streaming (504) the processed audio signal.

35. The method of claim 33 or 34, wherein the processing (502) of the audio signal comprises performing at least one of a number-of-channels adjusting process of adjusting the number of channels of the audio signal, a data selecting process of selecting some of data included in the audio signal, and a band reducing process of discarding a high frequency component of the audio signal, according to at least one of the network information and the terminal information.

36. The method of claim 35, wherein the processing of the audio signal comprises:
determining (600) whether a bitrate of the audio signal, which corresponds to the signal information, is smaller than an allowable bitrate of the terminal, which corresponds to the terminal information;
determining (602) whether the bitrate of the audio signal is greater than an available bandwidth of the network, which corresponds to the network information, if it is determined that the bitrate of the audio signal is smaller than the allowable bitrate; and
performing (604) at least one of the number-of-channels adjusting process, the data selecting process, and the band reducing process if it is determined that the bitrate of the audio signal is not smaller than the available bitrate or is greater than the available bandwidth.

37. The method of claim 35, wherein the processing of the audio signal comprises:
determining (700) whether a bitrate of the audio signal, which corresponds to the signal information, is smaller than an available bitrate of the terminal, which corresponds to the terminal information;
determining (702) whether the bitrate of the audio signal is greater than an available bandwidth of the network, which corresponds to the network information, if it is determined that the bitrate of the audio signal is smaller than the allowable bitrate;
performing (704) the number-of-channels adjusting process if it is determined that the bitrate of the audio signal is greater than the available bandwidth or is not smaller than the allowable bitrate;
determining (706) whether the bitrate of the audio signal that is processed using the number-of-channels adjusting process is greater than the available bandwidth; and
performing (708) at least one of the data selecting process and the band reducing process if it is determined that the bit rate of the audio signal processed using the number-of-channels adjusting process is greater than the available bandwidth.

38. The method of claim 35, wherein the processing of the audio signal comprises:
determining (802) at least one process to be applied to the audio signal among the number-of-channels adjusting process, the data selecting process, and the band reducing process, using a table; and
processing (804, 904) the audio signal using the determined process, wherein, in the table, at least one of the number-of-channels adjusting process, the data selecting process, and the band reducing process is mapped with at least one of the network information and the terminal information.

39. The method of claim 38, wherein the processing of the audio signal further comprises generating (800) the table using the audio signal and at least one of the network information and the terminal information.

40. The method of claim 38 or 39, wherein, in the table, at least one of the number-of-channels adjusting process, the data selecting process, and the band reducing process is mapped with at least one of the network information and the terminal information and at least one of sound quality information of the terminal and additional information.

41. The method of claim 38, 39 or 40, wherein, in the table, a process degree, which is at least one of the number of channels to be adjusted in the number-of-channels adjusting process, an amount of data to be selected from the audio signal in the data selecting process, and an amount of a high frequency component of the audio signal to be discarded in the band reducing process, are mapped with at least one of the network information and the terminal information; and
the processing (804) of the audio signal comprises processing (904) the audio signal according to a process degree.

42. The method of claim 41, wherein the processing (804) of the audio signal comprises:
checking (900) the type of the audio signal;
determining (902) the process degree using the checked result and the table;
and
processing (904) the audio signal according to the determined process degree.

43. A computer readable recording medium storing at least one computer program for controlling an apparatus according to a process to be applied to an audio signal to be reproduced in a terminal connected to a network,
wherein the process is a method according to any of claims33 to 42.

44. The computer readable recording medium of claim 43, further storing a computer program for a process of streaming the processed audio signal.

## Patentansprüche

1. Vorrichtung zum Verarbeiten eines in einem mit einem Netzwerk verbundenen Endgerät zu reproduzierenden Audiosignals, wobei die Vorrichtung folgendes umfasst:
eine Eingabeeinheit (10), die das Audiosignal empfängt; und
eine Signalverarbeitungseinheit (12), die so angeordnet ist, dass sie das von der Eingabeeinheit empfangene Audiosignal unter Verwendung eines Verhältnisses zwischen wenigstens einem aus Netzwerkinformationen, Endgeräteinformationen und Signalinformationen und wenigstens einem einer Mehrzahl von durch das Audiosignal zu verarbeitenden Prozessen verarbeitet;
wobei die Netzwerkinformationen das Netzwerk betreffende Informationen bezeichnen, wobei die Endgeräteinformationen das Endgerät betreffende Informationen bezeichnen, und wobei die Signalinformationen Informationen über das Audiosignal bezeichnen.

2. Vorrichtung nach Anspruch 2, ferner umfassend eine Ausgabeeinheit (14), die das verarbeitete Audiosignal streamt.

3. Vorrichtung nach Anspruch 1 oder 2, wobei die Signalverarbeitungseinheit eine Hauptverarbeitungseinheit (20) umfasst, die so angeordnet ist, dass sie das Audiosignal verarbeitet unter Verwendung mindestens eines Kanalanzahlanpassungsprozesses zur Anpassung der Anzahl der Kanäle des Audiosignals, eines Datenauswahlprozesses zur Auswahl bestimmter in dem Audiosignal enthaltener Daten oder eines Bandreduzierungsprozesses zum Verwerfen einer Hochfrequenzkomponente des Audiosignals, gemäß wenigstens den Netzwerkinformationen oder den Endgeräteinformationen.

4. Vorrichtung nach Anspruch 3, wobei die Netzwerkinformationen Informationen zum Status des Netzwerks aufweisen, wobei die Endgeräteinformationen Informationen zu wenigstens der Fähigkeit, der Art oder dem Status des Endgeräts aufweisen, und wobei die Signalinformationen Informationen zur Bitrate des Audiosignals aufweisen.

5. Vorrichtung nach Anspruch 4, wobei die Informationen zum Status des Netzwerks wenigstens eine Information in Bezug auf die verfügbare Bandbreite des Netzwerks, die statische Fähigkeit des Netzwerks oder die zeitlich veränderlichen Bedingungen des Netzwerks aufweisen;
wobei die Endgeräteinformationen Informationen zu wenigstens einem der zulässigen Bitrate des Endgeräts, der Datenverarbeitungsfähigkeit des Endgeräts, der Leistung des Endgeräts, der Speicherkapazität des Endgeräts und der Art des Endgeräts aufweisen; und
wobei die Signalinformationen die Art des Audiosignals beinhalten.

6. Vorrichtung nach einem der Ansprüche 3 bis 5, wobei die Hauptverarbeitungseinheit (20) ein komprimiertes Audiosignal von der Eingabeeinheit empfängt und das komprimierte Audiosignal unter Verwendung des Datenauswahlprozesses verarbeitet.

7. Vorrichtung nach Anspruch 6, wobei das komprimierte Audiosignal ein Bitstrom mit einer Funktionalität einer feinen Skalierbarkeit ist.

8. Vorrichtung nach Anspruch 7, wobei das komprimierte Audiosignal wenigstens einen Bit Sliced Arithmetic Coding (BSAC) Bitstrom oder einen Advanced Audio Coding Scalable (AAC) Bitstrom aufweist.

9. Vorrichtung nach einem der Ansprüche 3 bis 5, wobei die Hauptverarbeitungseinheit so angeordnet ist, dass sie ein komprimiertes Audiosignal oder ein nicht komprimiertes Audiosignal von der Eingabeeinheit empfängt und das Audiosignal unter Verwendung des Kanalanzahlanpassungsprozesses und des Bandreduzierungsprozesses verarbeitet.

10. Vorrichtung nach einem der Ansprüche 3, 4, 5 oder 9, wobei die Hauptverarbeitungseinheit (20) so angeordnet ist, dass sie nur einen Teil der Daten in Biteinheiten bei der Ausführung des Datenauswahlprozesses auswählt.

11. Vorrichtung nach einem der Ansprüche 3, 4, 5 oder 9, wobei die Hauptverarbeitungseinheit (20) so angeordnet ist, dass sie einen Teil der Daten in Einheiten von Schichten bei der Ausführung des Datenauswahlprozesses auswählt.

12. Vorrichtung nach einem der Ansprüche 3 bis 11, wobei die Hauptverarbeitungseinheit (20) folgendes umfasst:
einen ersten Vergleichsabschnitt (40), der die Signalinformationen und die Netzwerkinformationen vergleicht;
einen zweiten Vergleichsabschnitt (42), der die Signalinformationen und die Endgeräteinformationen vergleicht; und
einen Unterverarbeitungsabschnitt (44), der das über die Eingabeeinheit eingegebene Audiosignal als Reaktion auf die Ergebnisse der in den ersten und zweiten Verarbeitungsabschnitten durchgeführten Vergleiche verarbeitet.

13. Vorrichtung nach einem der Ansprüche 3 bis 12, wobei die Signalverarbeitungseinheit so angeordnet ist, dass sie einen Nicht-Verstärkungsabschnitt als die in dem Audiosignal enthaltenen Daten gemäß wenigstens einer der Netzwerkinformationen oder der Endgeräteinformationen bei der Ausführung des Datenauswahlprozesses auswählt.

14. Vorrichtung nach einem der Ansprüche 3 bis 13, wobei die Signalverarbeitungseinheit so angeordnet ist, dass sie die Anzahl der Kanäle der Audiosignale anpasst, indem die Anzahl der Kanäle der Audiosignale gemäß wenigstens einer der Netzwerkinformationen oder der Endgeräteinformationen bei der Ausführung des Kanalanzahlanpassungsprozesses verringert.

15. Vorrichtung nach Anspruch 3, wobei die Signalverarbeitungseinheit ferner eine Prozessbestimmungseinheit (62) umfasst, die so angeordnet ist, dass sie einen auf das Audiosignal anzuwendenden Prozess aus dem Kanalanzahlanpassungsprozess, dem Datenauswahlprozess und dem Bandreduzierungsprozess bestimmt gemäß wenigstens einer der Netzwerkinformationen oder der Endgeräteinformationen, und wobei die Hauptverarbeitungseinheit (20) das Audiosignal unter Verwendung des in der Prozessbestimmungseinheit bestimmten Prozesses verarbeitet.

16. Vorrichtung nach Anspruch 15, wobei die Prozessbestimmungseinheit (62) so angeordnet ist, dass sie einen Prozess aus dem Kanalanzahlanpassungsprozess, dem Datenauswahlprozess und dem Bandreduzierungsprozess bestimmt gemäß wenigstens einer der Klangqualitätsinformationen oder zusätzlicher Informationen, die in dem durch die Eingabeeinheit eingegebenen Audiosignal enthalten sind.

17. Vorrichtung nach Anspruch 16, wobei die zusätzlichen Informationen wenigstens Benutzerpräferenzinformationen oder Metadaten entsprechen.

18. Vorrichtung nach Anspruch 15, 16 oder 17, wobei die Prozessbestimmungseinheit (67) einen Prozessauswahlabschnitt umfasst, der so angeordnet ist, dass er die Art des auf das Audiosignal anzuwendenden Prozesses auswählt aus dem Kanalanzahlanpassungsprozess, dem Datenauswahlprozess und dem Bandreduzierungsprozess unter Verwendung einer Tabelle, die wenigstens die Netzwerkinformationen oder die Endgeräteinformationen auf wenigstens einen Prozess des Kanalanzahlanpassungsprozesses, des Datenauswahlprozesses und des Bandreduzierungsprozesses abbildet.

19. Vorrichtung nach Anspruch 16, , wobei die Prozessbestimmungseinheit (67) einen Prozessauswahlabschnitt umfasst, der so angeordnet ist, dass er die Arten eines auf das Audiosignal anzuwendenden Prozesses auswählt aus dem Kanalanzahlanpassungsprozess, dem Datenauswahlprozess und dem Bandreduzierungsprozess unter Verwendung einer Tabelle, die wenigstens die Netzwerkinformationen oder die Endgeräteinformationen und wenigstens die Klangqualitätsinformationen oder die zusätzlichen Informationen auf wenigstens einen Prozess des Kanalanzahlanpassungsprozesses, des Datenauswahlprozesses und des Bandreduzierungsprozesses abbildet.

20. Vorrichtung nach Anspruch 19, wobei die Tabelle Klangqualitätsinformationen aufweist, die erzeugt werden unter Verwendung von wenigstens einem aus einem Objective Difference Grade (ODG) und einem Verzerrungsindex.

21. Vorrichtung nach Anspruch 20, wobei eine Tabelle, die Informationen zu hoher Klangqualität aufweist, unter Verwendung des Objective Difference Grade erzeugt wird, und wobei eine Tabelle, die Informationen zu niedriger oder mittlerer Klangqualität aufweist, unter Verwendung des Verzerrungsindex erzeugt wird.

22. Vorrichtung nach Anspruch 19, wobei die Tabelle, die Klangqualitätsinformationen aufweist, erzeugt wird unter Verwendung von wenigstens einem aus Klanghelligkeit, welche im Verhältnis zu der Frequenz des Audiosignals steht, Klangbildbreite, die im Verhältnis zu der Klangqualität gemäß der Position einer Klangquelle steht, und Klangklarheit, die im Verhältnis zu Verzerrungsrauschen steht.

23. Vorrichtung nach Anspruch 22, wobei die Klanghelligkeit, die Klangbildbreite und die Klangklarheit unter Verwendung eines subjektiven Hörtests evaluiert werden.

24. Vorrichtung nach Anspruch 23, wobei der subjektive Hörtest ein Multi-Stimulus-Test with Hidden Reference and Anchors (MUSHRA) ist.

25. Vorrichtung nach Anspruch 23, wobei der subjektive Hörtest ein ITU-R Recommendation BS.1116-Test ist.

26. Vorrichtung nach Anspruch 22, wobei die Klanghelligkeit und die Klangklarheit unter Verwendung einer objektiven Bewertungsmethode getrennt bewertet werden.

27. Vorrichtung nach Anspruch 26, wobei die objektive Bewertungsmethode ITU-R Recommendation BS.1387 ist.

28. Vorrichtung nach einem der Ansprüche 18 bis 27, wobei die Prozessbestimmungseinheit (62) ferner einen Prozessgradbestimmungsabschnitt (82, 104) umfasst, der so angeordnet ist, dass er einen Prozessgrad bestimmt, der wenigstens einem der Anzahl der in dem Kanalanzahlanpassungsprozess angepassten Kanäle, einer in dem Datenauswahlprozess auszuwählenden Datenmenge oder einer Höhe einer in dem Bandreduzierungsprozess aus dem Audiosignal zu verwerfenden Hochfrequenzkomponente entspricht, unter Verwendung der Tabelle, welche die Anzahl der anzupassenden Kanäle, die auszuwählende Datenmenge und die Höhe der zu verwerfenden Hochfrequenzkomponente auf wenigstens die Netzwerkinformationen oder die Endgeräteinformationen abbildet; und
wobei die Hauptverarbeitungseinheit (20) das Audiosignal verarbeitet unter Verwendung des in dem Prozessgradbestimmungsabschnitt bestimmten Prozessgrades.

29. Vorrichtung nach Anspruch 28, wobei der Prozessgradbestimmungsabschnitt (82, 104) die Art des Audiosignals prüft und den Prozessgrad bestimmt unter Verwendung des überprüften Ergebnisses und der Tabelle.

30. Vorrichtung nach einem der Ansprüche 18 bis 29, wobei die Prozessbestimmungseinheit (62) ferner einen Tabellenerzeugungsabschnitt (100) umfasst, der so angeordnet ist, dass er die Tabelle erzeugt unter Verwendung wenigstens der Netzwerkinformationen oder der Endgeräteinformationen sowie des von der Eingabeeinheit empfangenen Audiosignals, und wobei die erzeugte Tabelle an den Prozessauswahlabschnitt ausgegeben wird.

31. Vorrichtung nach Anspruch 30, wobei der Tabellenerzeugungsabschnitt (100) die Tabelle gemäß dem Audiosignal und wenigstens einer der Netzwerkinformationen oder der Endgeräteinformationen unter Verwendung der ITU-R Recommendation BS.1387 erzeugt.

32. Verwendung der Vorrichtung nach einem der Ansprüche 1 bis 31, die auf MPEG-21 angewendet wird.

33. Verfahren zum Verarbeiten eines in einem mit einem Netzwerk verbundenen Endgerät zu reproduzierenden Audiosignals, wobei das Verfahren folgendes umfasst:
Empfangen (500) des Audiosignals; und
Verarbeiten (502) des Audiosignals unter Verwendung eines Verhältnisses zwischen wenigstens einem aus Netzwerkinformationen, Endgeräteinformationen und Signalinformationen und wenigstens einem einer Mehrzahl von in dem Audiosignal zu verarbeitenden Prozessen;
wobei die Netzwerkinformationen das Netzwerk betreffende Informationen bezeichnen, wobei die Endgeräteinformationen das Endgerät betreffende Informationen bezeichnen, und wobei die Signalinformationen Informationen über das Audiosignal bezeichnen.

34. Verfahren nach Anspruch 33, ferner umfassend das Streaming (504) des verarbeiteten Audiosignals.

35. Verfahren nach Anspruch 33 oder 34, wobei das Verarbeiten (502) des Audiosignals das Ausführen wenigstens eines Prozesses eines Kanalanzahlanpassungsprozesses zur Anpassung der Anzahl der Kanäle des Audiosignals, eines Datenauswahlprozesses zur Auswahl bestimmter in dem Audiosignal enthaltener Daten oder eines Bandreduzierungsprozesses zum Verwerfen einer Hochfrequenzkomponente des Audiosignals, gemäß wenigstens den Netzwerkinformationen oder den Endgeräteinformationen umfasst.

36. Verfahren nach Anspruch 35, wobei das Verarbeiten des Audiosignals folgendes umfasst:
Bestimmen (600), ob eine Bitrate des Audiosignals, die den Signalinformationen entspricht, kleiner ist als eine zulässige Bitrate des Endgerätes, die den Endgeräteinformationen entspricht;
Bestimmen (602), ob die Bitrate des Audiosignals höher ist als eine verfügbare Bandbreite des Netzwerks, welche den Netzwerkinformationen entspricht, wenn bestimmt wird, dass die Bitrate des Audiosignals niedriger ist als die zulässige Bitrate; und
Ausführen (604) wenigstens eines Prozesses
Kanalanzahlanpassungsprozesses, des Datenauswahlprozesses und des Bandreduzierungsprozesses, wenn bestimmt wird, dass die Bitrate des Audiosignals nicht kleiner ist als die verfügbare Bitrate oder höher ist als die verfügbare Bandbreite.

37. Verfahren nach Anspruch 35, wobei das Verarbeiten des Audiosignals folgendes umfasst:
Bestimmen (700), ob eine Bitrate des Audiosignals, die den Signalinformationen entspricht, niedriger ist als eine verfügbare Bitrate des Endgerätes, die den Endgeräteinformationen entspricht;
Bestimmen (702), ob die Bitrate des Audiosignals höher ist als eine verfügbare Bandbreite des Netzwerks, die den Netzwerkinformationen entspricht, wenn bestimmt wird, dass die Bitrate des Audiosignals niedriger ist als die zulässige Bitrate;
Ausführen (704) des Kanalanzahlanpassungsprozesses, wenn bestimmt wird, dass die Bitrate des Audiosignals höher ist als die verfügbare Bandbreite oder nicht kleiner ist als die zulässige Bitrate;
Bestimmen (706), ob die Bitrate des verarbeiteten Audiosignals unter Verwendung des Kanalanzahlanpassungsprozesses höher ist als die verfügbare Bandbreite; und
Ausführen (708) wenigstens des Bandauswahlprozesses oder des Bandreduzierungsprozesses, wenn bestimmt wird, dass die Bitrate des unter Verwendung des Kanalanzahlanpassungsprozesses verarbeiteten Audiosignals höher ist als die verfügbare Bandbreite.

38. Verfahren nach Anspruch 35, wobei das Verarbeiten des Audiosignals folgendes umfasst:
Bestimmen (802) wenigstens eines auf das Audiosignal anzuwendenden Prozesses aus dem Kanalanzahlanpassungsprozess, dem Datenauswahlprozess und dem Bandreduzierungsprozess unter Verwendung einer Tabelle; und
Verarbeiten (804, 904) des Audiosignals unter Verwendung des bestimmten Prozesses,
wobei in der Tabelle wenigstens ein Prozess aus dem
Kanalanzahlanpassungsprozess, dem Datenauswahlprozess und dem Bandreduzierungsprozess mit wenigstens einer der Netzwerkinformationen oder der Endgeräteinformationen abgebildet wird.

39. Verfahren nach Anspruch 38, wobei das Verarbeiten des Audiosignals ferner das Erzeugen (800) der Tabelle unter Verwendung des Audiosignals und wenigstens einer der Netzwerkinformationen oder der Endgeräteinformationen umfasst.

40. Verfahren nach Anspruch 38 oder 39, wobei in der Tabelle wenigstens ein Prozess aus dem Kanalanzahlanpassungsprozess, dem Datenauswahlprozess und dem Bandreduzierungsprozess mit wenigstens einer der Netzwerkinformationen oder der Endgeräteinformationen und wenigstens einer der Klangqualitätsinformationen oder der zusätzlichen Informationen abgebildet wird.

41. Verfahren nach Anspruch 38, 39 oder 40, wobei in der Tabelle ein Prozessgrad, der wenigstens einem der Anzahl der in dem Kanalanzahlanpassungsprozess angepassten Kanäle, einer in dem Datenauswahlprozess aus dem Audiosignal auszuwählenden Datenmenge oder einer Höhe einer in dem Bandreduzierungsprozess aus dem Audiosignal zu verwerfenden Hochfrequenzkomponente entspricht, abgebildet wird mit wenigstens einer der Netzwerkinformationen oder der Endgeräteinformationen; und
wobei das Verarbeiten (804) des Audiosignals das Verarbeiten (904) des Audiosignals gemäß einem Prozessgrad umfasst.

42. Verfahren nach Anspruch 41, wobei das Verarbeiten (804) des Audiosignals folgendes umfasst:
Prüfen (900) der Art des Audiosignals;
Bestimmen (902) des Prozessgrads unter Verwendung des überprüften Ergebnisses und der Tabelle; und
und
Verarbeiten (904) des Audiosignals gemäß dem bestimmten Prozessgrad.

43. Computerlesbares Aufzeichnungsmedium, das wenigstens ein Computerprogramm zum Steuern einer Vorrichtung gemäß einem auf ein in einem mit einem Netzwerk verbundenen Endgerät zu reproduzierenden Audiosignals anzuwendenden Prozesses,
wobei der Prozess ein Verfahren nach einem der Ansprüche 33 bis 42 ist.

44. Computerlesbares Aufzeichnungsmedium nach Anspruch 43, das ferner ein Computerprogramm für eine Prozess des Streamings des verarbeiteten Audiosignals speichert.

## Revendications

1. Appareil pour traiter un signal audio à reproduire dans un terminal connecté à un réseau, l'appareil comprenant ;
une unité d'entrée (10) qui reçoit le signal audio ; et
une unité de traitement de signal (12) conçue pour traiter le signal audio reçu de l'unité d'entrée à l'aide d'une relation entre au moins l'une parmi des informations de réseau, des informations de terminal et des informations de signal, et au moins un traitement choisi parmi plusieurs traitements à traiter par le signal audio,
dans lequel les informations de réseau sont des informations concernant le réseau, les informations de terminal sont des informations concernant le terminal, et les informations de signal sont des informations sur le signal audio.

2. Appareil selon la revendication 2, comprenant en outre une unité de sortie (14) qui diffuse le signal audio traité.

3. Appareil selon la revendication 1 ou 2, dans lequel l'unité de traitement de signal comprend une unité de traitement principale (20) conçue pour traiter le signal audio à l'aide d'au moins l'un parmi un traitement de réglage de nombre de canaux réglant le nombre de canaux du signal audio, un traitement de sélection de données sélectionnant des données incluses dans le signal audio, et un traitement de réduction de bande ignorant une composante haute fréquence du signal audio, selon les informations de réseau et/ou les informations de terminal.

4. Appareil selon la revendication 3, dans lequel les informations de réseau comprennent des informations concernant l'état du réseau, les informations de terminal comprennent des informations concernant au moins l'un parmi la capacité, le type et l'état du terminal, et les informations de signal comprennent des informations concernant un débit binaire du signal audio.

5. Appareil selon la revendication 4, dans lequel les informations concernant l'état du réseau comprennent au moins l'une parmi une bande passante disponible du réseau, la capacité statique du réseau, et les conditions variables dans le temps du réseau ;
les informations de terminal comprennent des informations concernant au moins l'un parmi un débit binaire admissible du terminal, la capacité de traitement de données du terminal, la puissance du terminal, la capacité de stockage du terminal, et le type du terminal ; et
les informations de signal comprennent en outre le type du signal audio.

6. Appareil selon l'une quelconque des revendications 3 à 5, dans lequel l'unité de traitement principale (20) reçoit un signal audio compressé provenant de l'unité d'entrée et soumet le signal audio compressé au traitement de sélection de données.

7. Appareil selon la revendication 6, dans lequel le signal audio compressé est un flux binaire ayant une fonctionnalité d'extensibilité à granularité fine.

8. Appareil selon la revendication 7, dans lequel le signal audio compressé comprend au moins un flux binaire Bit Sliced Arithmetic Coding (BSAC) et un flux binaire Advanced Audio Coding Scalable (AAC).

9. Appareil selon l'une quelconque des revendications 3 à 5, dans lequel l'unité de traitement principale (20) est conçue pour recevoir un signal audio compressé ou un signal audio non compressé provenant de l'unité d'entrée et pour soumettre le signal audio au traitement de réglage de nombre de canaux et au traitement de réduction de bande.

10. Appareil selon la revendication 3, 4, 5 ou 9, dans lequel l'unité de traitement principale (20) est conçue pour sélectionner seulement une partie des données en unités de bits lors de l'exécution du traitement de sélection de données.

11. Appareil selon la revendication 3, 4, 5 ou 9, dans lequel l'unité de traitement principale (20) est conçue pour sélectionner une partie des données en unités de couches lors de l'exécution du traitement de sélection de données.

12. Appareil selon l'une quelconque des revendications 3 à 11, dans lequel l'unité de traitement principale (20) comprend :
une première partie de comparaison (40) qui compare les informations de signal et les informations de réseau ;
une seconde partie de comparaison (42) qui compare les informations de signal et les informations de terminal ; et
une partie de sous-traitement (44) qui traite le signal audio entré par l'intermédiaire de l'unité d'entrée en réponse aux résultats des comparaisons effectuées dans les première et seconde parties de comparaison.

13. Appareil selon l'une quelconque des revendications 3 à 12, dans lequel l'unité de traitement de signal est conçue pour sélectionner une partie non enrichie comme données incluses dans le signal audio en fonction selon les informations de réseau et/ou les informations de terminal lors de l'exécution du traitement de sélection de données.

14. Appareil selon l'une quelconque des revendications 3 à 13, dans lequel l'unité de traitement de signal est conçue pour régler le nombre de canaux des signaux audio en diminuant le nombre de canaux de signaux audio selon les informations de réseau et/ou les informations de terminal lors de l'exécution du traitement de réglage de nombre de canaux.

15. Appareil selon la revendication 3, dans lequel l'unité de traitement de signal comprend en outre une unité de détermination de traitement (62) conçue pour déterminer un traitement à appliquer au signal audio, parmi le traitement de réglage de nombre de canaux, le traitement de sélection de données, et le traitement de réduction de bande, selon les informations de réseau et/ou les informations de terminal, et l'unité de traitement principale (20) soumet le signal audio au traitement déterminé dans l'unité de détermination de traitement.

16. Appareil selon la revendication 15, dans lequel l'unité de détermination de traitement (62) est conçue pour déterminer un traitement parmi le traitement de réglage de nombre de canaux, le traitement de sélection de données, et le traitement de réduction de bande, selon des informations de qualité sonore et/ou des informations supplémentaires incluses dans le signal audio entré provenant de l'unité d'entrée.

17. Appareil selon la revendication 16, dans lequel les informations supplémentaires correspondent à des informations de préférence d'utilisateur et/ou des méta-données.

18. Appareil selon la revendication 15,16 ou 17, dans lequel l'unité de détermination de traitement (67) comprend une partie de sélection de traitement qui est conçue pour sélectionner le type de traitement à appliquer au signal audio parmi le traitement de réglage de nombre de canaux, le traitement de sélection de données, et le traitement de réduction de bande à l'aide d'une table qui met en correspondance au moins les informations de réseau et/ou les informations de terminal avec au moins l'un parmi le traitement de réglage de nombre de canaux, le traitement de sélection de données, et le traitement de réduction de bande.

19. Appareil selon la revendication 16, dans lequel l'unité de détermination de traitement (62) comprend une partie de sélection de traitement (80, 102) qui est conçue pour sélectionner les types d'un traitement à appliquer au signal audio parmi le traitement de réglage de nombre de canaux, le traitement de sélection de données, et le traitement de réduction de bande à l'aide d'une table qui met en correspondance les informations de réseau et/ou les informations de terminal et les informations de qualité sonore et/ou les informations supplémentaires avec l'un parmi le traitement de réglage de nombre de canaux, le traitement de sélection de données, et le traitement de réduction de bande.

20. Appareil selon la revendication 19, dans lequel la table comprenant les informations de qualité sonore est générée à l'aide d'un degré de différence objective et/ou d'un indice de distorsion.

21. Appareil selon la revendication 20, dans lequel une table comprenant des informations de qualité audio élevée est générée à l'aide du degré de différence objectif, et une table comprenant des informations de qualité audio faible ou intermédiaire est générée à l'aide de l'indice de distorsion.

22. Appareil selon la revendication 19, dans lequel la table comprenant les informations de qualité sonore est générée à l'aide d'au moins l'une parmi la luminosité du son, qui est liée à la fréquence du signal audio, la largeur d'image sonore, qui est liée à la qualité du son en fonction de la position d'une source sonore, et la clarté du son, qui est liée au bruit de distorsion.

23. Appareil selon la revendication 22, dans lequel la luminosité du son, la largeur d'image sonore, et la clarté du son sont évaluées en utilisant un test d'écoute subjectif.

24. Appareil selon la revendication 23, dans lequel le test d'écoute subjectif est un test à plusieurs stimulus avec une référence et des ancrages cachés.

25. Appareil selon la revendication 23, dans lequel le test d'écoute subjectif est la Recommandation UIT-R BS.1116.

26. Appareil selon la revendication 22, dans lequel la luminosité du son et la clarté du son sont évaluées séparément en utilisant un procédé d'évaluation objective.

27. Appareil selon la revendication 26, dans lequel le procédé d'évaluation objective est la Recommandation UIT-R BS.1387.

28. Appareil selon l'une quelconque des revendications 18 à 27, dans lequel l'unité de détermination de traitement (62) comprend en outre une unité de détermination de degré de traitement (82, 104) conçue pour déterminer un degré de traitement, qui est au moins l'un parmi le nombre de canaux à régler dans le traitement de réglage de nombre de canaux, une quantité de données à sélectionner dans le traitement de sélection de données, et une quantité d'une composante haute fréquence à ignorer à partir du signal audio dans le traitement de réduction de bande, à l'aide de la table qui fait correspondre le nombre de canaux à régler, la quantité de données à sélectionner, et la quantité de la composante haute fréquence à ignorer avec les informations de réseau et/ou les informations de terminal ; et
l'unité de traitement principal (20) traite le signal audio à l'aide du degré de traitement déterminé par la partie de détermination de degré de traitement.

29. Appareil selon la revendication 28, dans lequel la partie de détermination de degré de traitement (82, 104) vérifie le type du signal audio et détermine le degré de traitement à l'aide du résultat contrôlé et de la table.

30. Appareil selon l'une quelconque des revendications 18 à 29, dans lequel l'unité de détermination de traitement (62) comprend en outre une partie de génération de table (100) qui est conçue pour générer la table à l'aide des informations de réseau et/ou des informations de terminal et du signal audio reçu de l'unité d'entrée et transmet la table générée à la partie de sélection de traitement.

31. Appareil selon la revendication 30, dans lequel la partie de génération de table (100) génère la table en fonction du signal audio et des informations de réseau et/ou des informations de terminal à l'aide de la Recommandation UIT-R BS.1387.

32. Utilisation de l'appareil selon l'une quelconque des revendications 1 à 31, étant appliquée à MPEG-21.

33. Procédé de traitement d'un signal audio à reproduire dans un terminal connecté à un réseau, le procédé comprenant les étapes consistant à :
recevoir (500) le signal audio ; et
traiter (502) le signal audio à l'aide d'une relation entre au moins l'une parmi des informations du réseau, des informations de terminal et des informations de signal et au moins un traitement choisi parmi plusieurs traitements à traiter dans le signal audio,
dans lequel les informations de réseau sont des informations concernant le réseau, les informations de terminal sont des informations concernant le terminal, et les informations de signal sont des informations sur le signal audio.

34. Procédé selon la revendication 33, comprenant en outre l'étape consistant à diffuser (504) le signal audio traité.

35. Procédé selon la revendication 33 ou 34, dans lequel le traitement (502) du signal audio comprend l'étape consistant à effectuer au moins l'un parmi un traitement de réglage de nombre de canaux réglant le nombre de canaux du signal audio, un traitement de sélection de données sélectionnant certaines données incluses dans le signal audio, et un traitement réducteur de bande ignorant une composante haute fréquence du signal audio, selon les informations de réseau et/ou les informations de terminal.

36. Procédé selon la revendication 35, dans lequel le traitement du signal audio comprend les étapes consistant à :
déterminer (600) si un débit binaire du signal audio, qui correspond aux informations de signal, est inférieur à un débit binaire admissible du terminal, qui correspond aux informations de terminal ;
déterminer (602) si le débit binaire du signal audio est supérieur à une bande passante disponible du réseau, qui correspond aux informations de réseau, s'il est déterminé que le débit binaire du signal audio est inférieur au débit binaire admissible ; et
effectuer (604) au moins l'un parmi le traitement de réglage de nombre de canaux, le traitement de sélection de données, et le traitement de réduction de bande, s'il est déterminé que le débit binaire du signal audio n'est pas inférieur au débit binaire disponible ou est supérieur à la bande passante disponible.

37. Procédé selon la revendication 35, dans lequel le traitement du signal audio comprend les étapes consistant à :
déterminer (700) si un débit binaire du signal audio, qui correspond aux informations de signal, est inférieur à un débit binaire disponible du terminal, qui correspond aux informations de terminal ;
déterminer (702) si le débit binaire du signal audio est supérieur à une bande passante disponible du réseau, qui correspond aux informations de réseau, s'il est déterminé que le débit binaire du signal audio est inférieur au débit binaire admissible ;
effectuer (704) le traitement de réglage de nombre de canaux s'il est déterminé que le débit binaire du signal audio est supérieur à la bande passante disponible ou n'est pas inférieur au débit binaire admissible ;
déterminer (706) si le débit binaire du signal audio soumis au traitement de réglage de nombre de canaux est supérieur à la bande passante disponible ; et
effectuer (708) le traitement de sélection de données et/ou le traitement de réduction de bande s'il est déterminé que le débit binaire du signal audio soumis au traitement de réglage de nombre de canaux est supérieur à la bande passante disponible.

38. Procédé selon la revendication 35, dans lequel le traitement du signal audio comprend les étapes consistant à :
déterminer (802) au moins un traitement à appliquer au signal audio parmi le traitement de réglage de nombre de canaux, le traitement de sélection de données, et le traitement de réduction de bande, à l'aide d'une table ; et
soumettre (804, 904) le signal audio au traitement déterminé,
dans lequel, dans la table, au moins l'un parmi le traitement de réglage de nombre de canaux, le traitement de sélection de données, et le traitement de réduction de bande est mis en correspondance avec les informations de réseau et/ou les informations de terminal.

39. Procédé selon la revendication 38, dans lequel le traitement du signal audio comprend en outre l'étape consistant à générer (800) la table à l'aide du signal audio et des informations de réseau et/ou des informations de terminal.

40. Procédé selon la revendication 38 ou 39, dans lequel, dans la table, au moins l'un parmi le traitement de réglage de nombre de canaux, le traitement de sélection de données, et le traitement de réduction de bande est mis en correspondance avec les informations de réseau et/ou les informations de terminal et avec les informations de qualité du son du terminal et/ou les informations supplémentaires.

41. Procédé selon la revendication 38, 39 ou 40, dans lequel, dans la table, un degré de traitement, qui est au moins l'un parmi le nombre de canaux à régler dans le traitement de réglage de nombre de canaux, une quantité de données à sélectionner à partir du signal audio dans le traitement de sélection de données, et une quantité d'une composante haute fréquence du signal audio à ignorer dans le traitement de réduction de bande, est mis en correspondance avec les informations de réseau et/ou les informations de terminal ; et
le traitement (804) du signal audio comprend l'étape consistant à traiter (904) le signal audio en fonction d'un degré de traitement.

42. Procédé selon la revendication 41, dans lequel le traitement (804) du signal audio comprend les étapes consistant à :
vérifier (900) le type du signal audio ;
déterminer (902) le degré de traitement à l'aide du résultat vérifié et de la table ; et
traiter (904) le signal audio en fonction du degré de traitement déterminé.

43. Support d'enregistrement lisible par ordinateur mémorisant au moins un programme informatique destiné à commander un appareil selon un traitement à appliquer à un signal audio à reproduire dans un terminal connecté à un réseau,
dans lequel le traitement est un procédé selon l'une quelconque des revendications 33 à 42.

44. Support d'enregistrement lisible par ordinateur selon la revendication 43, mémorisant en outre un programme informatique pour un traitement de diffusion du signal audio traité.
